# EUROPEAN PATENT APPLICATION

(11) **EP 1 418 272 A1**
(43) Date of publication of application: **12.05.2004**
(21) Application number: 02702784.6
(22) Date of filing: 07.03.2002
(51) Int. Cl.: D21H 19/10, D21H 19/28, B65D 3/22, B65D 81/34, B65D 81/38

(54) **PACKAGING MATERIAL AND CONTAINER**

(30) Priority: 07.03.2001 JP 2001063189; 05.07.2001 JP 2001204601; 05.07.2001 JP 2001204602; 28.11.2001 JP 2001362408; 05.03.2002 JP 2002058407; 05.03.2002 JP 2002058409
(71) Applicant: NISSIN SHOKUHIN KABUSHIKI KAISHA, Osaka-shi, Osaka 532-8524 (JP); Tomen Co., Ltd., Tokyo 100-8623 (JP); Terada, Masaki, c/o Nissin Shokuhin Kabushiki Kaisha, Osaka-shi, Osaka 532-8524 (JP)
(72) Inventor: TERADA, Masaki, NISSIN SHOKUHIN KABUSHIKI KAISHA, Osaka-shi, Osaka 532-8524 (JP); MIYAKE, Hidenobu, TOPPAN INSATSU KABUSHIKI KAISHA, Taito-ku, Tokyo 110-0016 (JP); ABE, Kiyoshi, TOMEN CO., LTD., Chiyoda-ku, Tokyo 100-8623 (JP); YOSHIYAMA, Noboyuki c/o Nissin Shokuhin Kabushiki, Yodogawa-Ku, Osaka-Shi, Osaka 532-8524 (JP); YAMAUCHI, Kunio c/oNissin Shokuhin Kabushiki k., Yodogawa-Ku, Osaka-Shi, Osaka 532-8524 (JP)
(74) Representative: Bowman, Paul Alan
(86) International application number: PCT/JP2002/002105
(87) International publication number: WO 2002/070820

(57) **Abstract**

A packaging material is provided having a paper layer and a first coating layer laminated thereon, the first coating layer includes a first material and a second material, wherein the first material is a natural rubber or a derivative thereof, and the second material is a material selected from natural resins, waxes and derivatives thereof having permeability into paper. In addition, a packaging material is provided further having a second coating layer laminated having oil resistance, which consists of a biodegradable material.

## Description

### [Technical Field]

The present invention relates to biodegradable packaging materials having a moisture barrier property and biodegradable containers having a moisture barrier property.

### [Background Art]

Many of food storage containers for preserving instant Chinese noodles, instant Japanese wheat noodles, instant fried noodles, instant soups and the like which have been generally used are those in which the main body of the container comprises a foamed resin or any one of various types of synthetic resins.

However, such a main body of the container comprising a foamed resin or any one of various types of synthetic resins does not generally have biodegradability (i.e., a property to be decomposed finally into water and carbon dioxide by microorganisms after being discarded), therefore, the containers after use have been subjected to incineration or landfill disposal.

Further, it has been also suggested that a part of the component is eluted from the food storage container which comprises the synthetic resin as described above.

Thus, in recent years, food storage containers as described above with a main body composed of paper have been put into practical use.

However, when the main body is composed of paper alone, moisture barrier properties or water resistance in such a main body are inferior. Therefore, it was problematic in that external moisture enters into the food storage container through the main body of the container during preserving a food within the food container, thus the food preserved therein may absorb the moisture resulting in wet food. Alternatively, when the food is eaten after hot water or the like is poured into the main body of the food storage container, the hot water may leak outward from the main body.

As a consequence, those in which moisture barrier properties or water resistance are improved in the main body of the container have been conventionally used, in general, through providing a coating layer which comprises a synthetic resin layer such as polyethylene on the main body of the container composed of paper.

However, when a coating layer which comprises a synthetic resin layer such as polyethylene is provided on the main body of the container composed of paper, such a coating layer does not have biodegradability, leading to similar problems to those in instances where the main body of the container comprises a synthetic resin, thereby causing problems of disposal of the food container after use.

### [Disclosure of the Invention]

The present invention was accomplished in view of the problems described hereinabove regarding biodegradable paper containers, and an object of the present invention is to provide a biodegradable packaging material in which a natural moisture proof material is used having a moisture barrier property, which can be also used as a storage container for foods, and a biodegradable container.

The present invention provides a packaging material having a paper layer and a first coating layer laminated thereon, the first coating layer comprises a first material and a second material, wherein the first material is a natural rubber or a derivative thereof, and the second material is a material selected from natural resins, waxes and derivatives thereof having permeability into paper.

According to this invention, a moisture barrier property is imparted by the first coating layer, whilst the both of the first material and the second material are any naturally occurring product or a derivative thereof having biodegradability. Therefore, a container manufactured using this packaging material made from paper can be readily put into disposal after use without harming the environment.

Such a packaging material according to this invention having the first coating layer which comprises the first material and the second material was made because in instances where a natural rubber or a derivative thereof (first material) is used alone, the coating layer is not successively adhered to the base composed of paper, which may result in facilitated peeling of the coating layer from the base composed of paper, accompanied by adhesiveness brought to the coating layer. To the contrary, when a material selected from natural resins, waxes and derivatives thereof having permeability into paper (the second material) is used alone, cracks of the coating layer may be caused upon the formation of the container by heat sealing or the like of this packaging material, leading to inability to sufficiently improve the water resistance or the moisture barrier property.

Moreover, the present invention provides a packaging material having a second coating layer laminated having oil resistance, which consists of a biodegradable material, in addition to the construction as described above.

By providing such a second coating layer, water resistance can be further improved, and a sealant property can be also ameliorated. In addition, oil resistance is imparted, which also enables application to foods including fats and oils.

When adhesion between the first coating layer and the second coating layer is difficult, a paper layer is provided between the first coating layer and the second coating layer to effect cohesive lamination of each coating layer to the paper, thereby preventing the second coating layer from peeling.

As the second material of the aforementioned first coating layer, at least one selected from the group consisting of ester gum, dammar, copal, copaiba balsam, benzoin gum, gum olibanum, opopanax, sandarac, Guaiac, mastic, myrrha, Leche de vaca, kauri gum, rosin, fir balsam, elemi, chicle, jelutong, sorva, Venezuela chicle, niger gutta, Chilte, gutta katiau, Tunu, sorbinba, Massaranduba chocolate, Massaranduba balata, balata, Rosidinha, guayule, gutta percha, gutta percha, shellac, urucury wax, carnauba wax, candelilla wax, whale wax, rice bran wax, sugarcane wax, bees wax, wood wax, montan wax, oil stuff seed wax and lanolin may be used. In particular, when ester gum, bees wax, carnauba wax, gutta percha, jelutong or rosin is used, properties as described above in a packaging material may be further improved. In addition, when ester gum is used, hot sealing property is improved, thereby allowing simple formation of the container using the packaging material.

Furthermore, when the ratio of the first material is too large upon forming the first coating layer, the coating layer becomes apt to be peeled from the paper layer, and adhesiveness on the coating layer is also elevated thereby causing sticky feel. To the contrary, when the ratio of the first material in the first coating layer is too small, water resistance and the moisture barrier property are lowered. Hence, the ratio of the first material in the first coating layer is preferably 70% by weight or less, and more preferably in the range of from 20 to 50% by weight.

As the biodegradable material of the aforementioned second coating layer, at least one selected from the group consisting of poly 3-hydroxybutyric acid, polylactic acid, polylactic acid derivatives, polybutylene succinate, modified polymerized resins derived from starch, and a shellac resin can be used. Such materials are not harmful to the environment because they have biodegradability.

Moreover, by using a paper layer having a clay coating on its surface, permeation into the paper layer of a material in the layer contacted with the paper layer can be prevented.

The present invention provides a container manufactured using the above-described packaging material, and such a container is excellent in a moisture barrier property and water resistance, and is not harmful to the environment because it consists of a biodegradable material. In particular, by disposing the second coating layer over the inside face of the container, application of the container to foods including fats and oils as their ingredients is enabled, accompanied by improvement of the sealant property and water resistance.

Furthermore, the present invention provides a container which comprises an outer container made from paper as a base material and an inner container made from a pulp mold which is fit to the inside of the outer container, wherein the inside face of the outer container has a first coating layer formed, and the inside face of the inner container has a second coating layer formed, with the first coating layer comprising a first material and a second material, wherein the first material is a natural rubber or a derivative thereof, and the second material is a material selected from natural resins, waxes and derivatives thereof having permeability into paper, and the second coating layer has oil resistance and consists of a biodegradable material.

According to this container, the first coating layer having a moisture barrier property is formed on the outer container, whilst the second coating layer having oil resistance is formed on the inner container. Therefore, the container has barrier properties such as a moisture barrier property and an oil resistance, as well as a high thermal insulation property on behalf of the inner container made from a pulp mold thus provided. In addition, the container is capable of being degraded by microorganisms leading to harmlessness to the environment because a biodegradable material is used, with principal material being paper or pulp.

In addition, in the container described above, a thermal insulation property can be further improved by disposing a spaced layer to a facing zone between the outer container and the inner container.

Moreover, in the aforementioned container, formation of a uniform second coating layer with no seam is enabled through forming the second coating layer over the inside face of the inner container as described above by a spray coating method with an aqueous solution or an alcoholic solution of a shellac resin.

Additionally, a container having a figuration in which an inner container made from paper is fit into an outer container made from a pulp mold is also allowable. In this instance, highly rigid biodegradable container can be achieved by fitting a container made from paper with a structure being in the order from the outside of: first coating layer/paper layer/second coating layer, to the outer container made from a pulp mold.

Furthermore, the present invention provides a process for producing a container using a packaging material having at least a paper layer and a first coating layer laminated, and a biodegradable sealant layer laminated to the outermost face, in such a manner to allow a part of the packaging material is overlaid, the first coating layer comprises a first material and a second material, wherein the first material is a natural rubber or a derivative thereof, and the second material is a material selected from natural resins, waxes and derivatives thereof having permeability into paper, and the process comprises a skived hemming processing performed such that the outermost face of the end face of the overlaid part where the packaging material is overlaid becomes the sealant layer.

When the end face of the packaging material is brought into contact with for example, an ingredient of the container, permeation of the ingredient of the container into the packaging material can be prevented by the skived hemming processing executed. In addition, formation of the container so that the sealant layers are overlaid with each other is enabled, thereby contributing in favorable formability and a shape retaining property of the container.

### [Brief Description of the Drawings]

Fig. 1 is a cross sectional view illustrating a layered structure of a packaging material according to the first embodiment.
Fig. 2 is a cross sectional view illustrating a paper cup which is a container according to the second embodiment.
Fig. 3 is a cross sectional view illustrating a state of a paper cup according to the second embodiment with a food preserved therein.
Fig. 4 is a cross sectional view illustrating a layered structure of a packaging material according to the third embodiment.
Fig. 5 is a cross sectional view illustrating a layered structure of a packaging material according to the fourth embodiment.
Fig. 6 is a cross sectional view illustrating a layered structure of a packaging material according to the fifth embodiment.
Fig. 7 is a perspective view illustrating a molded tray which is a container made from paper according to the sixth embodiment.
Fig. 8 is a perspective view illustrating a paper cup which is a container made from paper according to the seventh embodiment.
Fig. 9 is a cross sectional view illustrating a layered structure of a packaging material according to the eighth embodiment.
Fig. 10 is a cross sectional view illustrating a layered structure of a packaging material according to the ninth embodiment.
Fig. 11 is a perspective view illustrating a paper cup which is a container made from paper according to the tenth embodiment.
Fig. 12 is a cross sectional view illustrating a paper cup which is a container made from paper according to the eleventh embodiment.
Fig. 13 is an explanatory drawing illustrating a general molding process of a paper cup according to the eleventh embodiment.
Fig. 14 is a cross sectional view illustrating a layered structure of a packaging material according to the twelfth embodiment.
Fig. 15 is a cross sectional view illustrating a layered structure of a packaging material according to the thirteenth embodiment.
Fig. 16 is a perspective view illustrating a paper cup which is a container made from paper according to the fourteenth embodiment.
Fig. 17 is a cross sectional view illustrating a layered structure of a packaging material according to the fifteenth embodiment.
Fig. 18 is a cross sectional view illustrating a paper cup which is a container made from paper according to the sixteenth embodiment.
Fig. 19 is a cross sectional view accounting for a method of skived hemming processing upon production of the container made from paper according to the sixteenth embodiment.

### [Best Mode for Carrying Out the Invention]

The packaging material and the container according to the invention are specifically explained below with references to the accompanying drawings.

### (1) First Embodiment

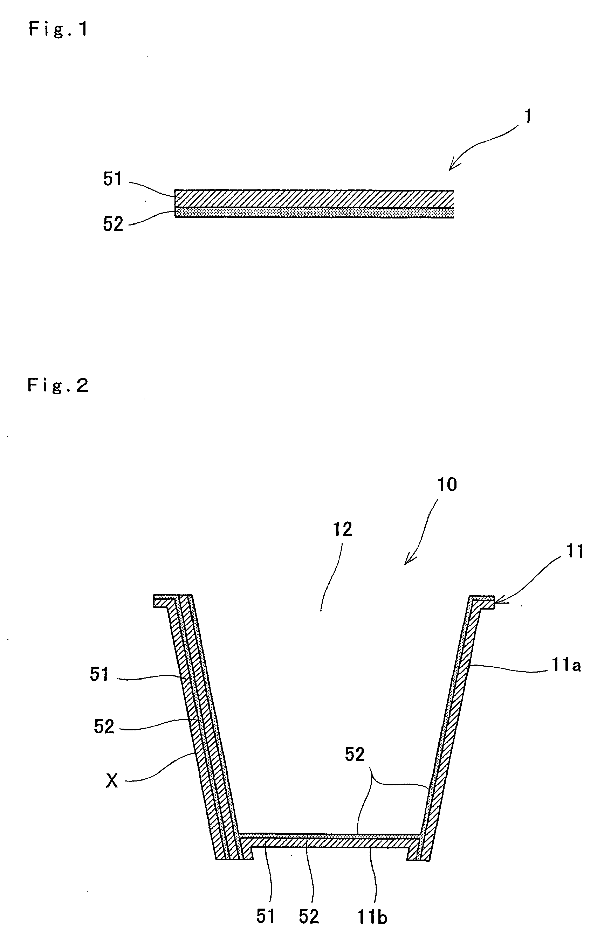

Fig. 1 is a cross sectional view illustrating a layered structure of a packaging material 1 according to the first embodiment. In Fig. 1, 51 denotes a paper layer, and 52 denotes a first coating layer having a moisture barrier property.

The first coating layer 52 is formed by applying an application liquid for coating which contains a natural rubber or a derivative thereof and a material selected from natural resins, waxes and derivatives thereof having permeability into paper, on a paper layer 51 followed by drying thereof.

### (2) Second Embodiment

Fig. 2 is a cross sectional view illustrating a paper cup 10 which is a container according to the second embodiment. A side body 11a of the paper cup 10 is formed by rolling the packaging material 1 of the first embodiment into a cylindrical form which is shrank downward to give a tapered shape so that the first coating layer 52 is positioned over the inside surface, followed by heat sealing of the overlaid part X of the two layers, as shown in left side in Fig. 2. A bottom lid 11b of the paper cup 10 is formed from the packaging material 1. The bottom lid 11b is mounted to the side body 11a by placing it into the bottom part of the side body 11a such that the first coating layer 52 thereof contacts with the first coating layer 52 of the side body 11a of the container main body 11, and heat sealing the coating layers 52 with each other.

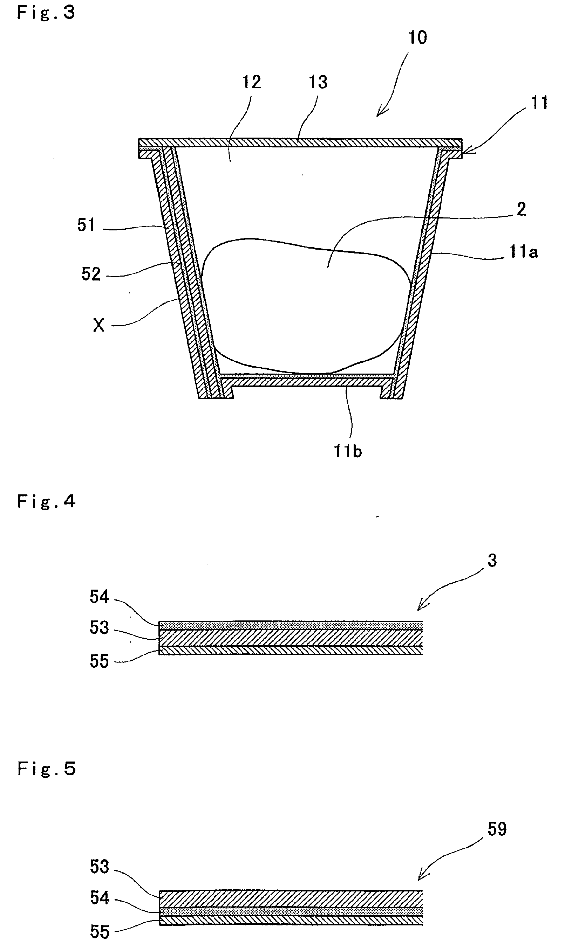

When this paper cup 10 is used as a food storage container, as shown in Fig. 3, a food 2 is put into the container main body 11, and thereafter an opening 12 in the upper part of the container main body 11 is allowed to be sealed with a proper lid member 13.

In the paper cup 10, entry of the outside moisture passing through the container main body 11 into the paper cup 10 during storage of the food 2 is suppressed by the first coating layer 52, thereby preventing the food 2 from getting wet through absorbing the moisture, accompanied by preventing a liquid from leaking out of the container main body 11 when the food 2 is eaten after a liquid such as hot water was poured into the container main body 11.

### (3) Third Embodiment

Fig. 4 is a cross sectional view illustrating a layered structure of the packaging material 3 according to the third embodiment. In Fig. 4, 53 denotes a paper layer, 54 denotes a first coating layer having a moisture barrier property, and 55 denotes a second coating layer having oil resistance and a sealant property. The constitution having the paper layer 53 and the first coating layer 54 is similar to the packaging material 1 according to the first embodiment.

The packaging material 3 has a second coating layer 55 provided on the reverse face to the face having the first coating layer 54 provided on the paper layer 53. The second coating layer 55 is formed from a material of shellac, a modified polymerized resin derived from starch, or the like.

### (4) Fourth Embodiment

Fig. 5 is a cross sectional view illustrating a layered structure of the packaging material 59 according to the fourth embodiment. In the packaging material 59, the constitution having the paper layer 53 and the first coating layer 54 is similar to the packaging material 3 according to the third embodiment. The packaging material 59 differs from the packaging material 3 of the third embodiment in regard to only one point that the second coating layer 55 is formed on the first coating layer 54.

The packaging materials 3 and 59 of the third and fourth embodiments may be used for forming the paper cup 10 of the second embodiment similarly to the packaging material 1 of first embodiment. To the paper cup 10 formed using the packaging material 3 or 59 is imparted oil resistance on behalf of the second coating layer 55, and in addition, water resistance and the sealant property are further improved. In other words, according to the present paper cup 10, entry of the outside moisture passing through the container main body 11 into the paper cup 10 during storage of the food 2 is suppressed, thereby preventing the food 2 from getting wet through absorbing the moisture, accompanied by preventing a liquid from leaking out of the container main body 11 when the food 2 is eaten after a liquid such as hot water was poured into the container main body 11, as well as avoiding permeation of fats and oils outside even if the food 2 contains fats and oils.

### <Example>

### Experiment 1

In experiment 1, packaging materials (Experimental Examples A1 to A9) were provided having an altered type of a coating layer provided on the paper layer, and then a heat sealing property, moisture vapor transmission rate, hot water resistance, a peeling property of the coating layer and adhesiveness of the coating layer of each of the Experimental Examples were evaluated.

In Experimental Examples A1 to A9, 240 g/m² board was used as the material of the paper layer. In addition, as materials for use in the application liquid for the coating layer provided on one face of the paper layer, a natural rubber, and ester gum having the softening point Tm of 120°C as the material selected from natural resins, waxes and derivatives thereof having permeability into paper were used. These materials were used after adjusting their total weight ratio to account for 20% by weight of 100% by weight of the application liquid by dissolving in cyclohexane. Ratio of the natural rubber and ester gum was as shown in Table 1 in connection with each of Experimental Examples A1 to A9.

Each application liquid for coating which was prepared in such a manner was each applied on one face of the aforementioned paper layer using a bar coater #40 (manufactured by R.D. Special Co.), and was air dried. Thereafter, each application liquid for coating was applied again using the bar coater #40 followed by air drying. A coating layer was formed on each one face of the paper layer to give the packaging materials of Experimental Examples A1 to A9.

Next, evaluation of thus obtained packaging materials of Experimental Examples A1 to A9 was conducted for each heat sealing property, moisture vapor transmission rate, hot water resistance, peeling property of the coating layer and adhesiveness of the coating layer. The results are shown in Table 1.

The heat sealing property herein was evaluated by overlaying each coating layer provided on the packaging material, heat sealing using an impulse sealer (HUJI IMUPULSE Co., Ltd. HUJI IMPULSE Sealer) with the temperature at the bonded part of 180°C and examining the adhesion state. Favorable adhesion state was evaluated as ○; and insufficient adhesion was evaluated as ×.

In respect of the moisture vapor transmission rate, 50 g of calcium chloride was charged into each bag which was prepared with each packaging material respectively, and each bag was sealed. After preserving each bag in a constant temperature and humidity atmosphere, at the temperature of 40°C and humidity of 90% for 24 hours, increase of the weight was determined, and the increased weight per unit area per day was identified as moisture vapor transmission rate (g/m²·day).

In connection with the water resistance, to each container manufactured using each packaging material was poured hot water of 100°C, left to stand for 20 minutes, and the leaking of the hot water from the container was examined. No occurrence of leaking was evaluated as ○; occurrence of slight swelling of the container was evaluated as Δ; and occurrence of leaking was evaluated as ×.

In regard to the peeling property of the coating layer, the coating layer provided on each packaging material was rubbed with a finger. Accordingly, no occurrence of peeling of the coating layer was evaluated as ○; occurrence of slight peeling of the coating layer was evaluated as Δ; and occurrence of peeling of the coating layer was evaluated as ×.

With regard to the adhesiveness of the coating layer, the coating layer provided on each packaging material was touched with hands. No sticky feeling was evaluated as ○; slight but not raising anxious sticky feeling was evaluated as Δ; and the presence of sticky feeling was evaluated as ×.

**Table 1**

| | Experimental Example | | | | | | | | |
|---|---|---|---|---|---|---|---|---|---|
| | A1 | A2 | A3 | A4 | A5 | A6 | A7 | A8 | A9 |
| Natural rubber (% by weight) | 100 | 90 | 70 | 50 | 30 | 25 | 20 | 15 | 5 |
| Ester gum having Tm of 120°C (% by weight) | 0 | 10 | 30 | 50 | 70 | 75 | 80 | 85 | 95 |
| Heat sealing property | ○ | ○ | ○ | ○ | ○ | ○ | ○ | × | × |
| Moisture vapor transmission rate (g/m²·day) | 663 | 183 | 142 | 79 | 65 | 65 | 35 | 71 | 298 |
| Water resistance | ○ | ○ | ○ | ○ | ○ | ○ | ○ | ○ | × |
| Peeling property of coating layer | × | × | ○ | ○ | ○ | ○ | ○ | ○ | ○ |
| Adhesiveness of coating layer | × | × | Δ | ○ | ○ | ○ | ○ | ○ | ○ |

As is clear from these results, in instances where the coating layer was provided using a natural rubber, and ester gum having the softening point Tm of 120°C as the material selected from natural resins, waxes and derivatives thereof having permeability into paper, when the amount of the natural rubber in the coating layer is too large, the coating layer becomes liable to peel, and in addition, the adhesiveness in the coating layer is increased. To the contrary, when the amount of the natural rubber in the coating layer is too small, heat sealing property, water resistance and moisture barrier property were lowered. Further, when the amount of the natural rubber in the coating layer fell within the range of from 20 to 50% by weight, coating layers could be achieved which are excellent in any terms of heat sealing property, moisture vapor transmission rate, water resistance, peeling property of the coating layer and the adhesiveness of the coating layer.

### Experiment 2

In Experiment 2, packaging materials (Experimental Examples A10 to A12) were prepared having altered type of the coating layer provided on the paper layer, and similarly to Experiment 1, evaluation of the packaging material of each Experimental Example was conducted for the heat sealing property, moisture vapor transmission rate, hot water resistance, peeling property of the coating layer and adhesiveness of the coating layer.

In Experimental Examples A10 to A12, 240 g/m² board was used as the paper layer, similarly to Experiment 1. As the material of the application liquid for the coating layer provided on one face of the paper layer, a natural rubber and ester gum were used. Ester gum used in each Experimental Example is as follows: in Experimental Example A10, ester gum having the softening point Tm of 109°C; in Experimental Example A11, ester gum having the softening point Tm of 120°C and ester gum having the softening point Tm of 109°C; and in Experimental Example A12, ester gum having the softening point Tm of 93°C. In each Experimental Example, the application liquid for coating was prepared with the ratio of ester gum and the natural rubber set as shown in Table 2 below, and their total weight ratio adjusted to account for 20% by weight of 100% by weight of the application liquid by dissolving in cyclohexane.

Then, each packaging material of any one of Experimental Examples A10 to A12 was obtained by using each application liquid for coating prepared in such a manner and forming each coating layer on one face of the paper layer similarly to Experiment 1.

Next, evaluation of thus resulting each packaging material of any one of Experimental Examples A10 to A12 obtained in the aforementioned manner was also conducted in a similar manner to Experiment 1 for the heat sealing property, moisture vapor transmission rate, heat resistance, peeling property of the coating layer and adhesiveness of the coating layer. The results are shown in Table 2.

**Table 2**

| | Experimental Example | | | | |
|---|---|---|---|---|---|
| | A6 | A10 | A11 | A7 | A12 |
| Natural rubber (% by weight) | 25 | 25 | 35 | 20 | 20 |
| Ester gum having Tm of 120°C (% by weight) | 75 | - | 15 | 80 | - |
| Ester gum having Tm of 109°C (% by weight) | - | 75 | 50 | - | - |
| Ester gum having Tm of 93°C (% by weight) | - | - | - | - | 80 |
| Heat sealing property | ○ | ○ | ○ | ○ | ○ |
| Moisture vapor transmission rate (g/m²·day) | 65 | 167 | 324 | 35 | 458 |
| Water resistance | ○ | ○ | ○ | ○ | ○ |
| Peeling property of coating layer | ○ | ○ | ○ | ○ | ○ |
| Adhesiveness of coating layer | ○ | ○ | ○ | ○ | × |

As a consequence, in instances where the amount of the natural rubber was identical, when packaging materials with the coating layer provided using ester gum having different softening point Tm were compared, less moisture vapor transmission rate was exhibited by the packaging material with the coating layer provided using ester gum having the softening point Tm of 120°C compared to the packaging material with the coating layer provided using ester gum having the softening point Tm of 109°C or the packaging material with the coating layer provided using ester gum having the softening point Tm of 93°C.

### Experiment 3

In Experiment 3, packaging materials (Experimental Examples B1 to B7) were prepared having altered type of the coating layer provided on the paper layer, and similarly to Experiment 1, evaluation of each Experimental Example was conducted for the heat sealing property, moisture vapor transmission rate, hot water resistance, peeling property of the coating layer and adhesiveness of the coating layer.

In Experimental Examples B1 to B7, 240 g/m² board was used as the paper layer, similarly to Experiment 1. Upon providing the coating layer on one face of the paper layer in Experimental Examples B1 to B7, a natural rubber, and rosin having the softening point Tm of 77°C as the material selected from natural resins, waxes and derivatives thereof having permeability into paper. Each application liquid for coating was prepared with the ratio of the natural rubber and this rosin set as shown in Table 3 below, and the total weight ratio of the natural rubber and the rosin adjusted to account for 20% by weight by dissolving in cyclohexane, respectively.

Then, each packaging material of any one of Experimental Examples B1 to B7 was obtained by using each application liquid for coating prepared in such a manner and forming each coating layer on one face of the paper layer similarly to Experiment 1.

Next, evaluation of thus resulting each packaging material of any one of Experimental Examples B1 to B7 obtained in the aforementioned manner was also conducted in a similar manner to Experiment 1 for the heat sealing property, moisture vapor transmission rate, hot water resistance, peeling property of the coating layer and adhesiveness of the coating layer. The results are shown in Table 3.

**Table 3**

| | Experimental Example | | | | | | |
|---|---|---|---|---|---|---|---|
| | B1 | B2 | B3 | B4 | B5 | B6 | B7 |
| Natural rubber (% by weight) | 90 | 70 | 60 | 50 | 30 | 20 | 5 |
| Rosin (% by weight) | 10 | 30 | 40 | 50 | 70 | 80 | 95 |
| Heat sealing property | × | × | × | × | × | × | × |
| Moisture vapor transmission rate (g/m²·day) | 206 | 213 | 200 | 148 | 129 | 214 | 324 |
| Water resistance | ○ | ○ | ○ | ○ | ○ | ○ | ○ |
| Peeling property of coating layer | × | × | Δ | ○ | ○ | ○ | ○ |
| Adhesiveness of coating layer | × | × | × | × | Δ | ○ | ○ |

As a consequence, the packaging material having the coating layer formed using rosin having the softening point Tm of 77°C as the material selected from natural resins, waxes and derivatives thereof having permeability into paper exhibited favorable water resistance and peeling property similarly to the packaging material having the coating layer formed using ester gum, but the heat sealing property and the adhesiveness of the coating layer were inferior. However, such drawbacks can be overcome by thickening the coating layer, allowing other natural resin or wax mixed therein, or providing a second coating layer having adhesiveness on the coating layer.

### Experiment 4

In Experiment 4, packaging materials (Experimental Examples C1 to C7) were prepared having altered type of the coating layer provided on the paper layer, and similarly to Experiment 1, evaluation of the packaging material of each Experimental Example was conducted for the heat sealing property, moisture vapor transmission rate, water resistance, peeling property of the coating layer and adhesiveness of the coating layer.

In Experimental Examples C1 to C7, 240 g/m² board was used as the paper layer, similarly to Experiment 1. Upon providing the coating layer on one face of the paper layer, in Experimental Example C1, a natural rubber, and carnauba wax having the melting point of 78 to 84 °C as the material selected from natural resins, waxes and derivatives thereof having permeability into paper were used, and in Experimental Examples C2 to C7, a natural rubber, and any combination of carnauba wax having the melting point of 78 to 84 °C and ester gum having the softening point Tm of 109°C or ester gum having the softening point Tm of 120°C were used.

Each application liquid for coating was then prepared with the ratio of the natural rubber and carnauba wax, ester gum having the softening point Tm of 109°C and ester gum having the softening point Tm of 120°C set as shown in Table 4 below, and the total weight ratio of the natural rubber and the material selected from natural resins, waxes and derivatives thereof having permeability into paper adjusted to account for 20% by weight by dissolving in cyclohexane, respectively.

Then, each packaging material of any one of Experimental Examples C1 to C7 was obtained by using each application liquid for coating prepared in such a manner and forming each coating layer on one face of the paper layer similarly to Experiment 1.

Next, evaluation of thus resulting each packaging material of any one of Experimental Examples C1 to C7 obtained in the aforementioned manner was also conducted in a similar manner to Experiment 1 for the heat sealing property, moisture vapor transmission rate, water resistance, peeling property of the coating layer and adhesiveness of the coating layer. The results are shown in Table 4.

**Table 4**

| | Experimental Example | | | | | | |
|---|---|---|---|---|---|---|---|
| | C1 | C2 | C3 | C4 | C5 | C6 | C7 |
| Natural rubber (% by weight) | 20 | 15 | 15 | 20 | 15 | 20 | 15 |
| Carnauba wax (% by weight) | 80 | 10 | 20 | 10 | 10 | 10 | 10 |
| Ester gum having Tm of 120°C (% by weight) | - | - | - | - | 75 | 70 | 65 |
| Ester gum having Tm of 109°C (% by weight) | - | 75 | 65 | 70 | - | - | - |
| Heat sealing property | × | ○ | ○ | ○ | ○ | ○ | ○ |
| Moisture vapor transmission rate (g/m²·day) | 70 | 51 | 66 | 53 | 49 | 50 | 63 |
| Water resistance | × | Δ | × | ○ | ○ | ○ | ○ |
| Peeling property of coating layer | ○ | ○ | ○ | ○ | ○ | ○ | ○ |
| Adhesiveness of coating layer | ○ | ○ | ○ | ○ | ○ | ○ | ○ |

As a consequence, the packaging material having the coating layer formed using carnauba wax alone having the melting point of 78 to 84°C as the material selected from natural resins, waxes and derivatives thereof having permeability into paper exhibited less heat sealing property and water resistance in comparison with the packaging material having the coating layer formed using ester gum, but the heat sealing property and water resistance were improved when carnauba wax and ester gum were used in combination.

### Experiment 5

In Experiment 5, packaging materials (Experimental Examples D1 to D3) were prepared having altered type of the coating layer provided on the paper layer, and similarly to Experiment 1, evaluation of each Experimental Example was conducted for the heat sealing property, moisture vapor transmission rate, water resistance, peeling property of the coating layer and adhesiveness of the coating layer.

In Experimental Examples D1 to D3, 240 g/m² board was used as the paper layer, similarly to Experiment 1. Upon providing the coating layer on one face of the paper layer, in Experimental Examples D1 and D2, a natural rubber, and candelilla wax having the melting point of 66 to 70°C as the material selected from natural resins, waxes and derivatives thereof having permeability into paper; and in Experimental Example D3, a natural rubber, the aforementioned candelilla wax and ester gum having the softening point Tm of 120°C were used in a ratio as shown in Table 5 below. These were dissolved in cyclohexane respectively, and thus each application liquid for coating was prepared so that the total weight ratio of the natural rubber and the material selected from natural resins, waxes and derivatives thereof having permeability into paper accounted for 20% by weight.

Then, each packaging material of any one of Experimental Examples D1 to D3 was obtained by using each application liquid for coating prepared in such a manner and forming each coating layer on one face of the paper layer, similarly to Experiment 1.

Next, evaluation of thus resulting each packaging material of any one of Experimental Examples D1 to D3 obtained in the aforementioned manner was also conducted in a similar manner to Experiment 1 for the heat sealing property, moisture vapor transmission rate, water resistance, peeling property of the coating layer and adhesiveness of the coating layer. The results are shown in Table 5.

**Table 5**

| | Experimental Example | | |
|---|---|---|---|
| | D1 | D2 | D3 |
| Natural rubber (% by weight) | 20 | 25 | 35 |
| Candelilla wax (% by weight) | 80 | 75 | 50 |
| Ester gum having Tm of 120°C (% by weight) | - | - | 15 |
| Heat sealing property | × | × | × |
| Moisture vapor transmission rate (g/m²·day) | 31 | 38 | 40 |
| Water resistance | × | × | ○ |
| Peeling property of coating layer | ○ | ○ | ○ |
| Adhesiveness of coating layer | × | × | × |

As a consequence, the packaging material having the coating layer formed using candelilla wax having the melting point of 66 to 70°C as the material selected from natural resins, waxes and derivatives thereof having permeability into paper exhibited less heat sealing property, water resistance and adhesiveness of the coating layer in comparison with the packaging material having the coating layer formed using ester gum, but water resistance was improved when candelilla wax and ester gum were used in combination. It is believed that use of ester gum at additional higher ratio may improve also the heat sealing property and adhesiveness of the coating layer similarly to the above instance in which carnauba wax and ester gum were used in combination.

### Experiment 6

In Experiment 6, packaging materials (Experimental Examples E1 to E3) were prepared having altered type of the coating layer provided on the paper layer, and similarly to Experiment 1, evaluation of each Experimental Example was conducted for the heat sealing property, water resistance, moisture vapor transmission rate and oil resistance.

In Experimental Examples E1 to E3, 240 g/m² board was used as the paper layer, similarly to Experiment 1. Upon providing the coating layer on one face of the paper layer, a natural rubber and ester gum having the softening point Tm of 120°C as the material selected from natural resins, waxes and derivatives thereof having permeability into paper were used in a weight ratio of the natural rubber and ester gum of 75:25. These were dissolved in cyclohexane respectively, and thus each application liquid for coating was prepared so that the total weight ratio of the natural rubber and the material selected from natural resins, waxes and derivatives thereof having permeability into paper accounted for 40% by weight.

Then, each application liquid for coating was applied on one face of the aforementioned paper layer using a bar coater #40 (manufactured by R.D. Special Co.), and was air dried. In Experimental Example E1, a packaging material having the coating layer provided on one face of the paper layer as described above was used. To the contrary, in Experimental Example E2, the packaging material used was produced by preparing a second application liquid for coating including shellac dissolved in ethanol to give 25% by weight, applying this second application liquid for coating on the above-described coating layer using a bar coater #40 (manufactured by R.D. Special Co.) and air drying to provide a second coating layer on the above-described coating layer.

Further, in Experimental Example E3, the packaging material used was produced by preparing a second application liquid for coating including shellac dissolved in ethanol to give 25% by weight, applying this second application liquid for coating on the reverse face to the above-described coating layer using a bar coater #40 (manufactured by R.D. Special Co.) and air drying to provide a second coating layer on the reverse face to the above-described coating layer of the paper layer.

Next, evaluation of each packaging material of any one of Experimental Examples E1 to E3 obtained in the aforementioned manner was conducted for heat sealing property, water resistance and moisture vapor transmission rate. In addition, evaluation for oil resistance was also conducted. The results are shown in Table 6.

Evaluation of the heat sealing property, water resistance and moisture vapor transmission rate was conducted in a similar manner as in Experiment 1. In connection with the evaluation of oil resistance, blue colored terpene oil was dropped to the face having the coating layer provided which contains the natural rubber of each packaging material, and left to stand for 1 hour. Permeation of the colored terpene oil was then examined on the reverse face to the dropped face of each packaging material. Absence of permeation was evaluated as ○; and the presence of permeation was evaluated as ×.

**Table 6**

| | Experimental Example | | |
|---|---|---|---|
| | E1 | E2 | E3 |
| heat sealing property | ○ | ○ | ○ |
| water resistance | ○ | ○ | ○ |
| moisture vapor transmission rate (g/m²·day) | 48.8 | 47.7 | 37.8 |
| oil resistance | × | ○ | ○ |

As a consequence, the packaging materials of Experiment Examples E2 and E3 having the second coating layer provided in which shellac was used in addition to the coating layer including the natural rubber, as coating layers of the paper layer, exhibited improved oil resistance in comparison with the packaging material of Experiment Example E1 having no second coating layer provided.

Moreover, the packaging material of Experiment Example E3 having the second coating layer provided to the paper layer in which shellac was used, on the reverse face to the coating layer including the natural rubber, exhibited less moisture vapor transmission rate in comparison with the packaging materials of Experiment Examples E2 and E3, and the moisture barrier property was improved accordingly.

### (5) Fifth Embodiment

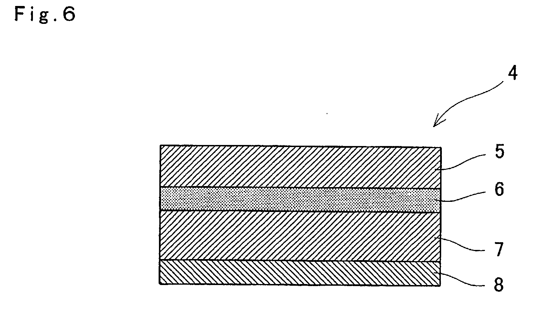

Fig. 6 is a cross sectional view illustrating a layered structure of a packaging material 4 according to the fifth embodiment. In Fig. 6, 5 and 7 denote a paper layer, 6 denotes a first coating layer having a moisture barrier property, and 8 denotes a second coating layer having oil resistance.

As materials for the paper layers 5 and 7, carton board, ivory paper, cup body paper or the like which is excellent in flexibility is preferably used taking into account of the container formability, and those having weighing capacity of approximately 80 to 160 g/m² may be suitably used.

The first coating layer 6 has a moisture barrier property, which includes a natural rubber or a derivative thereof and a natural resin, a wax and a derivative thereof? having permeability into paper, preferably includes a natural rubber and ester gum. For example, a mixture of four natural products, i.e., a natural rubber, ester gum, modified rosin and natural wax can be used as the material. In this case, illustrative mixing ratio may be: natural rubber/ ester gum/ modified rosin/natural wax = 20/ 8/ 57/ 9 (ratio by solid content), or the like. Furthermore, jelutong, gutta percha, chicle, sorva, or the like can be used neat or as a mixture, instead of ester gum rosin or the like.

In order to impart a moisture barrier property which are nearly equal to those of polyethylene to the first coating layer 6, thickness of the first coating layer 6 of approximately 30 to 40 µm is required. Examples of general method of application of the first coating layer 6 on the paper layer 5 include sandwich lamination by an extrusion lamination method, or a method in which heat lamination is performed after coating (thermal lamination). The first coating layer 6 may be formed through sandwich lamination of the paper layer 5 and the paper layer 7 by the aforementioned method.

The second coating layer 8 has a sealant property and water resistance in addition to oil resistance, which is formed on the reverse face to the face provided with the first coating layer 6 of the paper layer 7. The second coating layer 8 has biodegradability, and is a layer containing any one of poly 3-hydroxy butyric acid (PHB), polylactic acid (PLA), a polylactic acid derivative, polybutylene succinate, a modified polymerized resin derived from starch, as well as a shellac resin or the like as a predominant material. Preferably, the second coating layer 8 is a layer comprising any of these resins itself, or comprising a mixture of these resins.

Application method of the second coating layer 8 on the paper layer 7 is generally an extrusion lamination method. However, in instances of a modified polymerized resin derived from starch, film making is required through dissolution in a solvent or a heat treatment of a liquid obtained by emulsification.

Lamination of each of these layers is carried out by any one of the following methods, in general. Specifically, either one of the following methods may be employed: a method in which after applying the second coating layer 8 on the paper layer 7 (according to extrusion lamination method or liquid coating method) , sandwich lamination of the paper layer 7 side of this complex material and the paper layer 5 is performed via the first coating layer 6 which was formed by extrusion; and a method in which after sandwich lamination of the paper layer 5 and the paper layer 7 via the first coating layer 6 which was formed by extrusion, the second coating layer 8 is applied on the reverse face to the face that contacts with the first coating layer of the paper layer 7 (according to extrusion lamination method or liquid coating method).

### (6) Sixth Embodiment

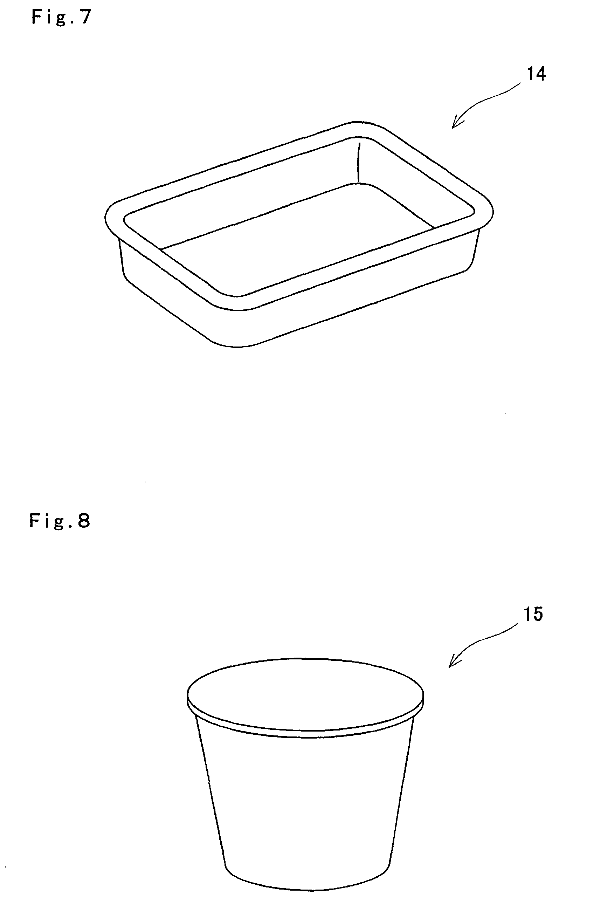

Fig. 7 is a perspective view illustrating a molded tray 14 which is a container made from paper according to the sixth embodiment. The molded tray 14 is produced by a molding process such as a pressure forming process or a vacuum forming process after cutting the packaging material 4 of the fifth embodiment into a desired size.

### (7) Seventh Embodiment

Fig. 8 is a perspective view illustrating a paper cup 15 which is a container made from paper according to the seventh embodiment. The paper cup 15 is produced by appropriate processing of the packaging material 4 of the fifth embodiment to give a side body member and a bottom part member followed by use of a generally known forming machine of paper cups.

### <Examples>

The fifth to seventh embodiments are explained below in more detail by way of Examples.

### Example 1

No coated cup body paper having the weighing capacity of 140 g/m² was prepared as a paper layer 7, and to this cup body paper was coextruded LACEA (Mitsui Chemicals, Inc.) which is PLA that becomes a material of the second coating layer 8 with polyethylene by a melt extrusion machine. After applying to give the thickness of 30 µm followed by rolling up, thus coextruded polyethylene was peeled from PLA and rolled up again. Accordingly, composite paper comprising: cup body paper (paper layer) 7 /second coating layer 8 was produced.

Next, a no coated cup body paper having the weighing capacity of 140 g/m² was prepared as a paper layer 5, and sandwich lamination between the composite paper described above was performed through melting extrusion of a mixed material of: natural rubber /ester gum / modified rosin/natural wax = 20/ 8/ 57 /9 (ratio of solid content). Thickness of the mixed material which becomes the first coating layer 6 was 40 µm. Moreover, the melt extrusion temperature was 200°C. The modified rosin which was used was modified rosin ester (trade name: PENSEL (R) D-160, manufactured by Arakawa Chemical Industries, Ltd.) (the same in Example below).

Accordingly, the packaging material 4 of Example 1 was obtained which comprised: cup body paper 5 having the weighing capacity of 140 g/m²/ first coating layer 6 having the thickness of 40 µm/ cup body paper 7 having the weighing capacity of 140 g/m²/ second coating layer 8 having the thickness of 30 µm which is PLA.

### Example 2

First, composite paper which is similar to that in Example 1 was produced which comprised: cup body paper (paper layer) 7/ second coating layer 8. Then, on one face of no coated cup body paper 5 having the weighing capacity of 140 g/m² was applied twice a 5:1 mixed solution of a 50% solution of jelutong in chloroform and a 50% solution of dammar in chloroform with a bar coater #26, followed by drying to form the first coating layer 6. Next, the composite paper described above and the cup body paper 5 were subjected to sandwich lamination so that the cup body paper 7 is brought into contact with the first coating layer 6. The thickness of the first coating layer was 40 µm.

Accordingly, the packaging material 4 of Example 2 was obtained which comprised: cup body paper 5 having the weighing capacity of 140 g/m²/ first coating layer 6 having the thickness of 40 µm/ cup body paper 7 having the weighing capacity of 140 g/m²/ second coating layer 8 having the thickness of 30 µm.

### Comparative Example 1

On one face of cup body paper having the weighing capacity of 250 g/m² was applied PLA in a similar manner to that in Example 1 to give the thickness of 30 µm thereby obtaining the packaging material of Comparative Example 1 which comprised: cup body paper having the weighing capacity of 250 g/m²/ PLA having the thickness of 30 µm.

### Comparative Example 2

On one face of cup body paper having the weighing capacity of 250 g/m² was applied polyethylene in a similar manner to that in Example 2 to give the thickness of 30 µm thereby obtaining the packaging material of Comparative Example 2 which comprised: cup body paper having the weighing capacity of 250 g/m²/ polyethylene having the thickness of 30 µm.

### Comparative Example 3

A mixed material of a natural rubber, ester gum, modified rosin, a natural wax with the same ratio of the solid content as in Example 1 was slot nozzle coated at 250°C on one face of cup body paper having the weighing capacity of 250 g/m² to form a moisture proof layer having the thickness of 40 µm. Thus, the packaging material of Comparative Example 3 was obtained which comprised: cup body paper having the weighing capacity of 250 g/m²/ moisture proof layer having the thickness of 40 µm.

### Experiment 7

Any one of the 5 types of packaging materials according to the aforementioned Examples 1 and 2, and Comparative Examples 1 to 3 was appropriately processed to yield a side body member and a bottom part member. Using a generally known forming machine of paper cups, paper cups were produced having the height of 107 mm, bore diameter of 94.5 mm, bottom diameter of 64.3 mm and taper angle of 6.5° so that the paper layer is circumferentially positioned.

The moisture barrier property, oil resistance, sealing property and biodegradability of these 5 types of the paper cup were measured and evaluated according to the following process. The results are shown in Table 7.

The moisture barrier property was evaluated by charging 50 g of calcium chloride into a sample cup, tight sealing the cup with an appropriate lid member followed by leaving to stand in an atmosphere at the temperature of 40°C and humidity of 90%. Changes in weight due to the transmitted moisture were measured, and the change in weight of less than 80 g/m²·day was evaluated as ○; and the change in weight of 80 g/m²·day or greater was evaluated as ×.

In regard to the oil resistance, curry powder dissolved in hot water was charged into a sample cup, and left at the temperature of 60°C for 24 hours, and the permeation degree into the paper was visually observed. Absence of the permeation was evaluated as ○; and presence of the permeation was evaluated as ×.

In connection with the sealing property, the formed sample cup was destroyed, and adhesiveness of the side body joint part and the bottom joint part was visually observed. Presence of peeling with paper scaling at the adhered part was evaluated as ○; and absence of paper scaling leading to judgment as insufficient adhesion was evaluated as ×.

Biodegradability was evaluated according to JIS K6950 "Plastic - Method of Testing Degree of Aerobic Biodegradation by Activated Sludge". Presence of degradation was evaluated as ○; and absence of degradation was evaluated as ×.

**Table 7**

| | Moisture Barrier Property | Oil Resistance | Sealing property | Biodegradability |
|---|---|---|---|---|
| Example 1 | ○ | ○ | ○ | ○ |
| Example 2 | ○ | ○ | ○ | ○ |
| Comparative Example 1 | × | ○ | ○ | ○ |
| Comparative Example 2 | ○ | ○ | ○ | × |
| Comparative Example 3 | ○ | × | ○ | ○ |

Accordingly, paper cups produced using the packaging materials of Example 1 and Example 2 in which the paper layer, the first coating layer, the paper layer and the second coating layer are laminated in this order are biodegradable paper cups that are excellent in moisture barrier property and oil resistance. In addition, by laminating in the order of: paper layer/ first coating layer/ paper layer/ second coating layer in such a manner, better adhesiveness is achieved between the first and the second coating layers in comparison with the case of lamination in the order of: paper layer/ first coating layer/ second coating layer. For example, when the paper cup was formed in the seventh embodiment, in instances of constitution of: paper layer/ first coating layer/ second coating layer, there may be a case in which peeling occurs between the first coating layer and the second coating layer, however, in instances of constitution of: paper layer / first coating layer/ paper layer / second coating layer, such problems are not caused.

### (8) Eighth Embodiment

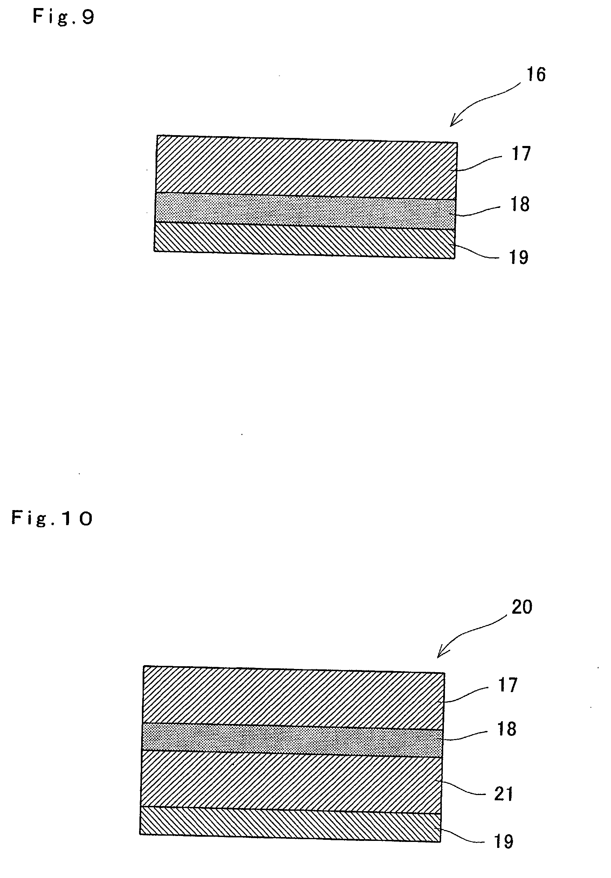

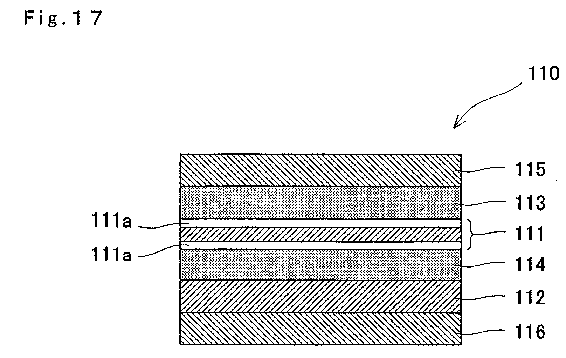

Fig. 9 is a cross sectional view illustrating a layered structure of a packaging material 16 according to the eighth embodiment. In Fig. 9, 17 denotes a paper layer, 18 denotes a first coating layer having a moisture barrier property, and 19 denotes a second coating layer.

For the paper layer 17, cup body paper having comparatively excellent flexibility is preferably used, and one having the weighing capacity of approximately 200 to 280 g/m² can be suitably used.

The first coating layer 18 is applied on the paper layer 17. The first coating layer 18 comprises a natural rubber or a derivative thereof, and a natural resin, a wax and a derivative thereof having permeability into paper. For example, a mixture of three natural products, i.e., a natural rubber, modified rosin and wax can be used as the material. In this case, illustrative mixing ratio may be: natural rubber/ modified rosin/ wax = 20/ 64/ 16 (ratio by solid content). Desired moisture barrier property can be achieved by the first coating layer 18 with the application amount of approximately 25 g/m².

Application of the first coating layer 18 on the paper layer 17 may be generally carried out by extrusion coating or nozzle coating with each natural product constituting the first coating layer 8 in a dissolved state. Alternatively, the first coating layer 8 may be also formed through dissolving each of the natural products described above in butyl acetate as a solvent to give 30 to 50% by weight of the solid content, followed by comma coating of the solution.

The second coating layer 19 comprises an ester compound of lauric acid and dextrin, and is formed on the first coating layer 18 as described above. The second coating layer 19 has oil resistance and a sealant property. Examples of the ester compound of lauric acid and dextrin which can be preferably used include Cornpol CPR-D703 (Nihon Cornstarch corporation). The second coating layer 19 may be formed by applying a 20 to 30% by weight (solid content) solution of the aforementioned Cornpol in ethyl acetate as a solvent by a comma coater (lip coater) in an amount of approximately 20 to 40 g/m² (solid content).

### (9) Ninth Embodiment

Fig. 10 is a cross sectional view illustrating a layered structure of a packaging material 20 according to the ninth embodiment. The packaging material 20 of this embodiment has a layered structure having a second paper layer 21 provided between the first coating layer 18 and the second coating layer 19 of the packaging material 16 according to the eighth embodiment.

In this embodiment, for both of the paper layer 17 and the second paper layer 21, cup body paper having the weighing capacity of approximately 130 to 150 g/m² may be used. The application amount of the first coating layer 18 and the second coating layer 19 is essentially equal to those in the packaging material 16 according to the eighth embodiment.

### (10) Tenth Embodiment

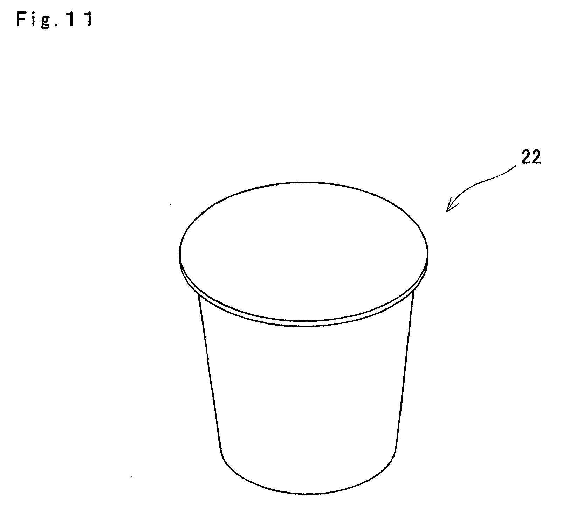

Fig. 11 is a perspective view illustrating a paper cup 22 which is a container made from paper according to the tenth embodiment. The paper cup 22 is produced by appropriately processing the packaging material 16 or 20 according to the eighth or ninth embodiment to yield a side body member and a bottom part member followed by use of a generally known forming machine of paper cups.

### <Examples>

The eighth to tenth embodiments are explained below in more detail by way of Examples.

### Example 3

Cup body paper having the weighing capacity of 250 g/m² was prepared as a paper layer 17, and on the reverse face of this cup body paper was applied a mixed material of natural rubber with a mixing ratio of: natural rubber /modified rosin /wax = 20/ 64/ 16, which had been melted at 200°C, by a nozzle coating method in an amount of 20 g/m² (solid content) to form a first coating layer 18.

Then, a solution of Cornpol CRP-D703 (Nihon Cornstarch corporation) which is an ester compound of lauric acid and dextrin dissolved in ethyl acetate at 30% by weight (solid content) was applied on the first coating layer 18 using a comma coater in an amount of 20 g/m² (solid content) to form a second coating layer 19. Accordingly, the packaging material 16 of Example 3 was obtained.

### Comparative Example 4

In Example 3, a packaging material prior to forming the second coating layer 19, i.e., a packaging material having a two layered structure of: paper layer /first coating layer was produced to obtain the packaging material of Comparative Example 4.

### Comparative Example 5

On the reverse face of the cup body paper having the weighing capacity of 250 g/m² used in Example 3 was formed a second coating layer similarly to Example 3. Specifically, a composite material having a two layered structure of: paper layer /second coating layer was produced to obtain the packaging material according to Comparative Example 5.

### Experiment 8

Any one of the 3 types of packaging materials according to the aforementioned Example 1, and Comparative Examples 4 and 5 was appropriately processed to yield a side body member and a bottom part member. Using a generally known forming machine of paper cups, a paper cup was produced having the height of 107 mm, bore diameter of 95 mm, bottom diameter of 64 mm and taper angle of 6.5° so that the paper layer is circumferentially positioned.

The moisture barrier property, oil resistance, biodegradability, and sealing property and formability upon previous formation of these 3 types of the paper cup were measured and evaluated according to the following process. The results are shown in Table 8.

The moisture barrier property was evaluated by charging 50 g of calcium chloride into a sample cup, tight sealing the cup with an appropriate lid member followed by leaving to stand in an atmosphere at the temperature of 40°C and humidity of 90%. Changes in weight due to the transmitted moisture were measured, and the change in weight of less than 80 g/m²·day was evaluated as ○; and the change in weight of 80 g/m²·day or greater was evaluated as ×.

In regard to the oil resistance, curry powder was applied on inside face of a sample paper cup, and left to stand in an atmosphere at the temperature of 40°C and humidity of 90% for three days. Thus, the presence of permeation into the packaging material was determined. Absence of the permeation was evaluated as ○; and presence of the permeation was evaluated as ×.

Biodegradability was evaluated according to JIS K6950 "Plastic - Method of Testing Degree of Aerobic Biodegradation by Activated Sludge". Presence of degradation was evaluated as ○; and incomplete degradation was evaluated as ×.

In connection with the sealing property, the formed sample paper cup was destroyed, and adhesiveness of the side body joint part and the bottom joint part was visually observed. Presence of peeling with paper scaling at the adhered part was evaluated as ○; and absence of paper scaling leading to judgment as insufficient adhesion was evaluated as ×.

In respect of the formability, machine aptitude upon forming into a paper cup using the forming machine of paper cups was visually observed. Judgment as formable without problem was evaluated as ○; and presence of a problem such as dissolution of the second coating layer in liquid paraffin leading to stickiness of the side body member was evaluated as ×.

**Table 8**

| | Moisture Barrier Property | Oil Resistance | Biodegradability | Machine Aptitude | |
|---|---|---|---|---|---|
| | | | | Sealing Property | Formability |
| Example 3 | ○ | ○ | ○ | ○ | ○ |
| Comparative Example 4 | × | × | ○ | ○ | × |
| Comparative Example 5 | × | ○ | ○ | ○ | ○ |

Accordingly, a paper cup produced using the packaging material of Example 3 in which the first coating layer and the second coating layer are laminated on the paper layer is a biodegradable paper cup that is excellent in moisture barrier property and oil resistance, and has formability. In addition, by using the ester compound of lauric acid and dextrin as a second coating layer as in Example 3, biodegradable cups having more excellent biodegradability and also are excellent in hot water resistance can be obtained than those in which polylactic acid is used.

### (11) Eleventh Embodiment

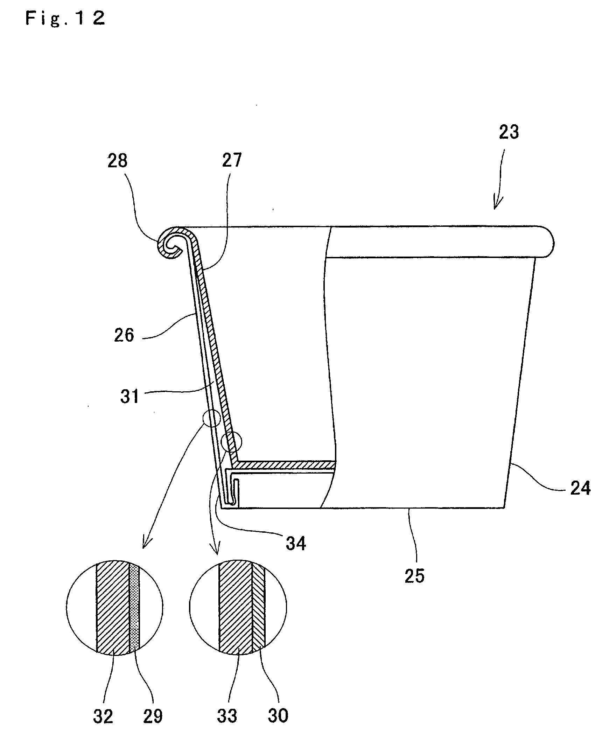

Fig. 12 is a cross sectional view illustrating a paper cup 23 which is a container made from paper according to the eleventh embodiment. The paper cup 23 comprises an outer container 26, which includes a side body 24 and a bottom part 25, made from cup body paper as a principal material having an opening in an upper area, and an inner container 27 made from a pulp mold fit to the inside of the outer container 26 so that it closely contacts with the aforementioned bottom part 25. The upper marginal parts of the aforementioned outer container 26 and inner container 27 are thermally fusion bound to overlay with each other, with each upper marginal part is curled outward to form a single portal marginal part 28.

Further, a first coating layer 29 is formed inside of the outer container 26, whilst the inside face of the inner container 27 is formed with a second coating layer 30 having oil resistance and water resistance. In addition, a heat insulation spaced layer 31 is formed between the bottom part of side body of the fitted inner container 27 and the bottom part of side body of the outer container 26.

The first coating layer 29, which is formed inside of the outer container 26, having a moisture barrier property is formed on the cup body paper 32, and is preferably a layer including a natural rubber or a derivative thereof, and a material selected from synthetic resins, waxes and derivatives thereof having permeability into paper.

The cup body paper 32 which is preferably used may be those having the weighing capacity of 160 to 280 g/m² although it depends on the finished size of the container.

The first coating layer 29 is formed on the cup body paper 32 by a comma coating method or a nozzle coating method. The thickness of the first coating layer 29 is preferably about 10 to 40 µm. Formation of the first coating layer 29 on the cup body paper 32 is preferably carried out prior to the formation of the outer container 26.

For the second coating layer 30, which is formed inside of the inner container 27, having oil resistance and water resistance, a biodegradable resin having such properties may be used. Specific examples thereof which can be used include natural materials such as shellac and the like, as well as ester based biodegradable reins, including for example, polylactic acid, poly 3-hydroxybutyric acid (PHB), polybutylene succinate (PBS) and modified polymerized resins derived from starch (e.g., modified starch, having 80% or more hydroxyl groups of starch inverted with a straight chain fatty acid such as lauric acid; trade name: CPR-D703, Nihon Cornstarch corporation).

In particular, shellac is preferred on behalf of its excellent safety because it is a natural material, and in addition, is also excellent in both oil resistance and water resistance. Preferred process of applying shellac may include forming a shellac resin layer by making a film from an aqueous solution or an alcoholic solution of shellac on the inside face of the inner container with a spray coating method. In this instance, thickness of shellac is preferably about 10 to 50 µm.

Further, in regard to the outer container 26, a side body member which constitutes the side body 24, and a bottom part member which constitutes the bottom part 25 are prepared beforehand, and formation is executed up to a previous step before curling the upper margin of the side body outward using a generally known forming machine of paper cups. A circular leg part 34 formed by joining the side body 24 and the bottom part 25 at the lower part of the outer container 26 may have a flat state depending on use of the container.

As the inner container 27, a container made from a pulp mold can be preferably used which is obtained by dissolving used paper into a solution followed by forming with a mold. For formation of the container made from a pulp mold, a wire mesh is set on the reverse face of the mold, and vacuuming is carried out from the reverse side of the mold. Then formation is completed after subjecting to a press step and a drying step.

Size of the inner container 27 is determined so that the bottom diameter is rather smaller than the bottom diameter of the outer container 26, and the length of the side body is determined to be substantially identical to the length from the joining part of the side body member and the bottom part member up to the upper marginal part of the side body member of the outer container 26. Both upper marginal parts of the middle bodies of the outer container 26 and inner container 27 are thereby overlaid in a single plane when the inner container 27 is fit to the inside of the outer container 26, and the bottom part of the inner container 27 and the bottom part of the outer container 26 are brought into close contact.

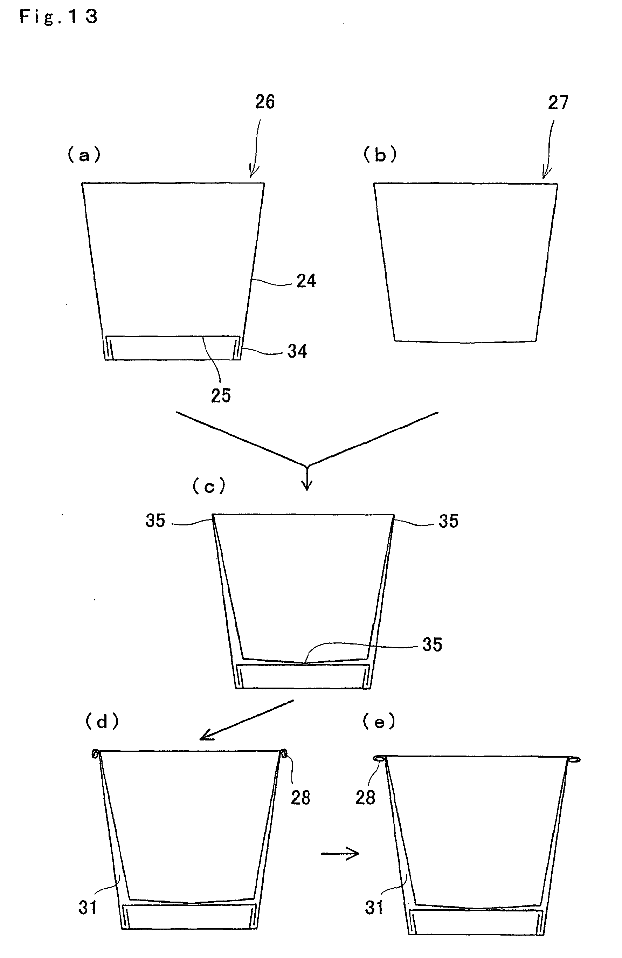

A general process for forming the paper cup 23 is explained below with reference to Fig. 13. First, a side body member and a bottom part member having desired size are produced from cup body paper having a first coating layer 29 formed on its one face. Using a generally known forming machine of paper cups, a paper cup as the outer container 26 is produced up to a previous step before curling the upper margin of the side body outward with the first coating layer 29 positioned to be an inner face (see, Fig. 13 (a)). A container made from a desired pulp mold is separately prepared as the inner container 27 (see, Fig. 13 (b)).

The inner container 27 is then fit to the inside of the outer container 26 followed by thermal fusion binding of the bottom parts and upper marginal circumferences of the middle bodies which shall become contact sites of the outer container 26 and inner container 27 (see, Fig. 13 (c)).

On the inner face of the inner container 27 of thus produced double container applied an aqueous solution or an alcoholic solution of a shellac resin with a spray coating method followed by heating to form the second coating layer 30. It should be noted, however, that the second coating layer 30 may be formed before the previous step to give the double container, for example, may be formed concurrently with the production of the inner container 27.

Finally, the upper marginal part of the side body of this double container is curled outward to form a portal marginal part 28 to obtain the paper cup 23 having a heat insulation spaced layer 31 between the lower outside part of side body of the inner container 27 and the lower inside part of side body of the outer container 26 (see, Fig. 13 (d)).

Upon formation of the portal marginal part 28 of this double container, it is preferred that formation is executed as described above through overlaying both upper marginal parts of the middle bodies of the outer container 26 and inner container 27 in a single plane, however for example, the following process shall be also possible. Specifically, according to the process, the side body of the inner container 27 is formed such that the upper marginal part of the side body thereof is rather higher than that of the outer container 26, and the upper marginal part of the outer container 26 is thermally fusion bound at a slightly lower site (peripheral part) of the upper marginal part of the inner container 27. Through curling the upper marginal circumference of the side body of the inner container 27 outward, formation is executed into such a shape that has the upper marginal part of the side body of the outer container 26 inserted in this curled portion.

Furthermore, in either instance described above, the thermal fusion binding step of the outer container 26 and the inner container 27 is not limited to prior to curling of the portal marginal part of the double container, but can be also carried out as the step following formation of the curling of the portal marginal part. Furthermore, the portal marginal part may be also processed into a flat shape depending on the intended use, through hot pressing of the curled portal marginal part in a vertical direction (see, Fig. 13 (e)).

Although a container 23 was provided herein having the inner container 27 made from a pulp mold and the outer container made from paper in combination as the eleventh embodiment, to the contrary, a container can be also provided having a container made from a pulp mold as an outer container, and a container made from paper as an inner container combined therewith.

In this instance, it is preferred that the inside face of the container made from paper forming the inner container shall be the second coating layer having oil resistance and water resistance, while the outside face of the inner container shall be the first coating layer having a moisture barrier property. More specifically, the packaging material made from paper according to the present invention is obtained by laminating: first coating layer /paper layer /second coating layer in this order, and then this packaging material is formed into an inner container with the second coating layer being an inside face thereof. Accordingly, production is perfected through fitting this inner container to the inside of the container made from a pulp mold. By using a pulp mold for the outside of the container, the container becomes more rigid than the container with its outside made from paper.

Moreover, similarly to the eleventh embodiment shown in Fig. 12, the thermal insulation property of the container can be improved by forming a space between the outer container and the inner container through making the container into a cupped shape and making the side body of the outer cup made from a pulp mold into the tapered shape with more enlarged lower part than the side body of the inner paper cup.

The structure of the inner container made from paper which is fit into the outer container made from a pulp mold is not necessarily a lamination structure of: first coating layer /paper layer /second coating layer, but for example, those having a structure of: paper layer /first coating layer /paper layer /second coating layer as in Example 1, or a structure of: paper layer /first coating layer /second coating layer as in Example 3 may be allowed, either of which is formed such that the second coating layer becomes an inside face of the container.

### <Example>

The eleventh embodiment is explained below in more detail by way of Example.

### Example 4

On one face of cup body paper 32 having the weighing capacity of 220 g/m² was applied a butyl acetate solution of a mixture of a natural rubber /modified rosin /carnauba wax /sorva /shellac /glycerin fatty acid ester = 20/ 64.4 /7.6 /4 /3.2 /0.8 (solid content: 40%) by a comma coating method in an amount of 25 g/m² to form the first coating layer 29.

A side body member and a bottom part member having desired size were produced from this cup body paper 32 having the first coating layer 29 formed on its one face. Then, using a generally known forming machine of paper cups, a paper cup as the outer container 26 was produced up to a previous step before curling the upper marginal part of the side body outward with the first coating layer 29 positioned to be an inner face.

A container made from a pulp mold having desired size was separately prepared as the inner container 27. On the inner face of this pulp mold container was applied an ethanol solution of shellac (solid content: 25%) by a spray coating method followed by drying to form a film. Accordingly, the second coating layer 30 having the thickness of 30 µm, and having oil resistance and water resistance was formed.

The inner container 27 was then fit to the inside of the outer container 26 to give a double container, followed by thermal fusion binding of the bottom parts and upper marginal circumferences of the middle bodies which shall become contact sites of the outer container 26 and inner container 27. Thereafter, the upper marginal part of the side body of this double container was curled to form a portal marginal part 28 to obtain the paper cup 23 of Example 4, which was produced using a biodegradable packaging material, having a heat insulation spaced layer 31 between the lower outside part of side body of the inner container 27 and the lower inside part of side body of the outer container 26 (see, Fig. 12).

### Comparative Example 6

To the outer face of the inner container 27 made from a pulp mold having the second coating layer formed on its inner face used in Example 6 was adhered cup body paper having the weighing capacity of 220 g/m² for both the side body and the bottom part with a hot melt adhesive. Thereafter, the upper marginal part of the side body was curled outward to form a portal marginal part to obtain the paper cup of Comparative Example 6.

### Experiment 9

The moisture barrier property, oil resistance, biodegradability, and thermal insulation property of the two types of the paper cup of Example 4 and Comparative Example 6 described above were measured and evaluated according to the following process. The results are shown in Table 9.

The moisture barrier property was evaluated by charging 50 g of calcium chloride into a sample cup, tight sealing the cup with an appropriate lid member followed by leaving to stand in an atmosphere at the temperature of 40°C and humidity of 90%. Changes in weight due to the transmitted moisture were measured, and the change in weight of less than 80 g/m²·day was evaluated as ○; and the change in weight of 80 g/m²·day or greater was evaluated as ×.

In regard to the oil resistance, curry powder was applied on the second coating layer side of the inner container of a sample paper cup, and left to stand in an atmosphere at the temperature of 40°C and humidity of 90% for three days, and the presence of permeation into the second coating layer was determined. Absence of the permeation was evaluated as ○; and presence of change in color due to the curry powder, i.e., presence of the permeation was evaluated as ×.

Biodegradability was evaluated according to JIS K6950 "Plastic - Method of Testing Degree of Aerobic Biodegradation by Activated Sludge". Presence of degradation was evaluated as ○; and residual hot melt adhesive, i.e., incomplete degradation was evaluated as ×.

In connection with the thermal insulation property, hot water was poured into a sample paper cup followed by leaving to stand for 5 minutes. Thereafter, side body of the paper cup was held with a hand, and thermal insulation effects and permeation into the container were determined. Capability of easy holding with a hand, accompanied by absence of permeation or leakage in the container was evaluated as ○; and incapability of holding with a hand owing to hot was evaluated as ×.

**Table 9**

| | Moisture barrier property (g/m²·day) | Oil resistance | Biodegradability | Thermal insulation property |
|---|---|---|---|---|
| Example 4 | 20 or less (○) | ○ | ○ | ○ |
| Comparative Example 6 | 80 or greater (×) | ○ | × | ○ |

Accordingly, the paper cup according to Example 4 comprising an inner container made from a pulp mold having a second coating layer applied on its inner face, which is fit into an outer container made from cup body paper having a first coating layer applied on its inner face which layer consists of a layer including a natural rubber, modified rosin, carnauba wax, sorva and shellac is revealed to be a paper container which is excellent in moisture barrier property, oil resistance, biodegradability and thermal insulation property.

### (12) Twelfth Embodiment

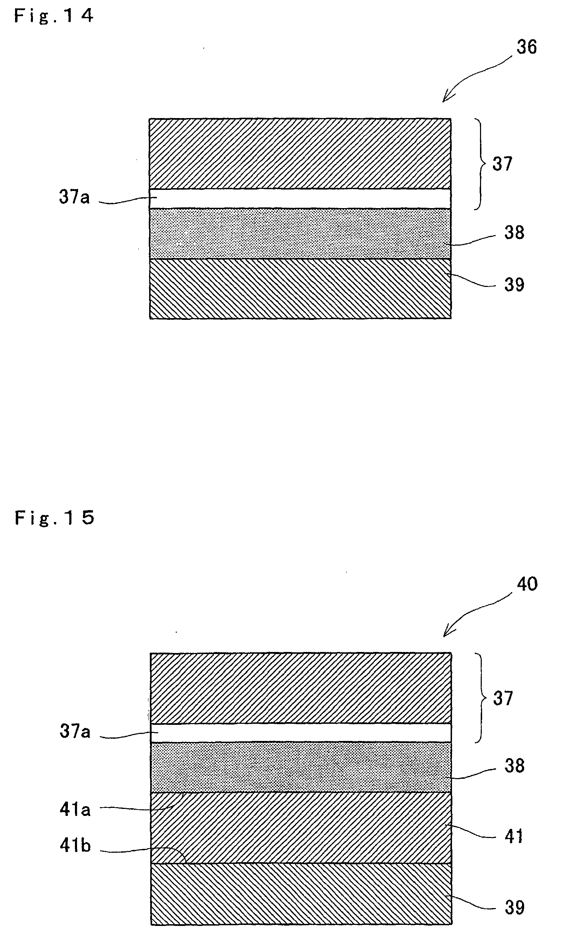

Fig. 14 is a cross sectional view illustrating a layered structure of a packaging material 36 according to the twelfth embodiment. In Fig. 14, 37 denotes a paper layer, 38 denotes a first coating layer having a moisture barrier property, and 39 denotes a second coating layer.

One face 37a of the paper layer 37 is subjected to clay coating. The first coating layer 38 is thereby formed on the paper layer 37 via the clay coating. Therefore, unnecessary permeation into the paper layer 37 of a solvent in a solution of a natural rubber which constitutes the first coating layer 38 can be prevented. Hence, excess amount of the first coating layer is not necessarily applied, which enables the reduction of residual odor. It is preferred that the clay coating is formed in an amount of approximately 2 to 15 g/m².

The first coating layer 38 is a layer which is responsible for the moisture barrier property, and includes a natural rubber or a derivative, and a material selected from synthetic resins, waxes and derivatives thereof having permeability into paper.

Through application of the first coating layer 38 in an amount of 10 to 70 g/m², preferably 20 to 50g/m², the moisture barrier property almost equivalent to polyethylene can be accomplished.

The aforementioned natural rubber or a derivative thereof, and a material selected from synthetic resins, waxes and derivatives thereof having permeability into paper are dissolved in an organic solvent such as toluene, ethyl acetate or the like, preferably ethyl acetate. This solution is applied on a face 37a of the paper layer 37 which was subjected to clay coating, in an amount of approximately 20 to 50 g/m² converted as a solid content with a known application method such as roll coating method, and dried.

The second coating layer 39 is a layer having oil resistance and a sealant property, of which base material may be polylactic acid (PLA), poly 3-hydroxybutyric acid (PHB), polybutylene succinate (PBS), a modified polymerized resin derived from starch or a mixture thereof, a shellac resin or the like.

### (13) Thirteenth Embodiment

Fig. 15 is a cross sectional view illustrating a layered structure of a packaging material 40 according to the thirteenth embodiment. Difference of the layered structure of the packaging material 40 from that of the packaging material 36 of the twelfth embodiment is limited only to the presence of the second paper layer 41 between the first coating layer 38 and the second coating layer 39. Such a constitution enables lamination of these layers even if adhesion involves difficulty between the first coating layer 38 and the second coating layer 39.

When the paper layer 37 has the weighing capacity of 50 to 140 g/m² and the density of 0.88 to 1.0 g/cm³, the second paper layer 41 which may be used preferably has the weighing capacity of 100 to 300 g/m² and the density of 0.85 to 1.0 g/cm³.

Although not shown in the figure, the face 41a, which is to be brought into contact with the first coating layer 38, of the second paper layer 41 can be also subjected to clay coating, and in this instance, unnecessary permeation into the second paper layer 41 of a solvent in a solution of a natural rubber which constitutes the first coating layer 38 can be prevented. Further, a clay layer can be also formed to the face 41b, which is to be brought into contact with the second coating layer 39, of the second paper layer 41. In this instance, permeation into the paper layer 41 of the components that constitute the second coating layer 39 can be suppressed, leading to advantages of possible reduction of the application amount of the second coating layer 39.

In the process for producing the packaging material 40, hot pressing lamination of the paper layer 37 having the applied first coating layer 38 and the paper layer 41 is conducted so that the first coating layer 38 is sandwiched therebetween. Finally, the second coating layer 39 is applied on the face, which is not contacted with first coating layer 38, of the paper layer 41 to give the packaging material 40.

Alternatively, the packaging material 40 may be obtained through hot pressing lamination of the paper face of the paper layer 41 having the laminated second coating layer 39, allowed to be opposed to the paper layer 37 having the applied first coating layer 38.

Examples of the applicable method for lamination of the second coating layer 39 onto the paper layer 41 include lamination methods such as an extrusion lamination method, a hot pressing lamination method

### (14) Fourteenth Embodiment

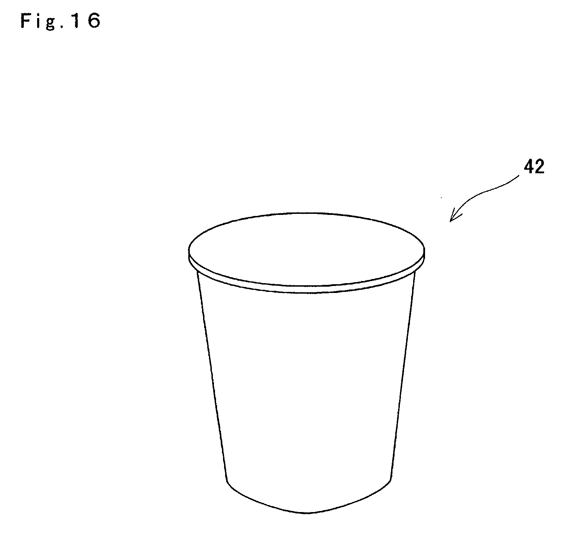

Fig. 16 is a perspective view illustrating a paper cup 42 which is a container made from paper according to the fourteenth embodiment. The paper cup 42 may be produced by appropriate processing of the packaging material 36 or 40 according to the twelfth or thirteenth embodiment to give the side body member and the bottom part member, and then any generally known forming machine of paper cups is used.

### <Example>

The twelfth to fourteenth embodiments are explained below in more detail by way of Example.

### Example 5

As a paper layer 37, single face coated cup body paper having the weighing capacity of 70 g/m² and the density of 0.9 g/cm³ with one face 37a which had been subjected to clay coating in an application amount of 10g/m² was prepared, whilst as a paper layer 41, no coated cup body paper having the weighing capacity of 220 g/m² and the density of 0.9 g/cm³ was prepared.

Separately, a solution of the natural rubber material (solid content: 50%, solvent: ethyl acetate) blended in a mixing ratio of: natural rubber /modified rosin /carnauba wax /ester gum /gutta percha = 20/ 57/ 7/ 8/ 2 was applied on the clay coated face 37a of the paper layer 37 by a gravure coating method, and dried (application amount: 30 g/m² (solid content)) to form the first coating layer 38.

Additionally, to the no coated cup body paper 14 which had been previously prepared was laminated polylactic acid (PLA), which shall be the second coating layer 39, prepared so that the application amount becomes 20 g/m² by a melt extrusion lamination method.

Finally, the packaging material 40 of Example 5 was produced having a layered structure of: paper layer 37 /first coating layer 38 /second paper layer 41 /second coating layer 39 through hot pressing lamination of the paper layer 37 having the applied first coating layer 38 and the paper layer 41 having the laminated first coating layer 39 by allowing the first coating layer 38 to be opposed to the paper layer 41 under a condition at the temperature of 140°C and the pressure of 0.31 MPa (lamination velocity: 50 m/min).

### Comparative Example 7

A packaging material of Comparative Example 7 having the layered structure of: paper layer /first coating layer /second paper layer /second coating layer was produced with the same materials and same condition as in Example 5 except that no coated cup body paper was used having the weighing capacity of 70 g/m² and the density of 0.9 g/cm³ with no clay coated on the paper layer.

### Experiment 10

Thickness of the first coating layer, moisture barrier property, residual odor, cup formability of the two types of the packaging material of Example 5 and Comparative Example 7 described above were measured and evaluated according to the following process. In connection with the moisture barrier property, residual odor, cup formability, the paper cup 42 as shown in Fig. 16 was produced with the aforementioned two types of packaging material, and was subjected to the measurement and evaluation. The results are shown in Table 10.

Thickness of the first coating layer was measured with a thickness indicator.

The moisture barrier property was measured according to JIS Z0208.

The residual odor was measured by gas chromatography (manufactured by Hewlett-Packard Co.). Upon the measurement, tempered glass which had been subjected to silane finishing was used as a column.

Evaluation of cup formability was carried out through forming a cup using a general forming machine of paper cups, and observation of the formability (formation velocity: 120 cups/min.). Absence of the problem was evaluated as ○; and presence of incomplete side sealing was evaluated as ×.

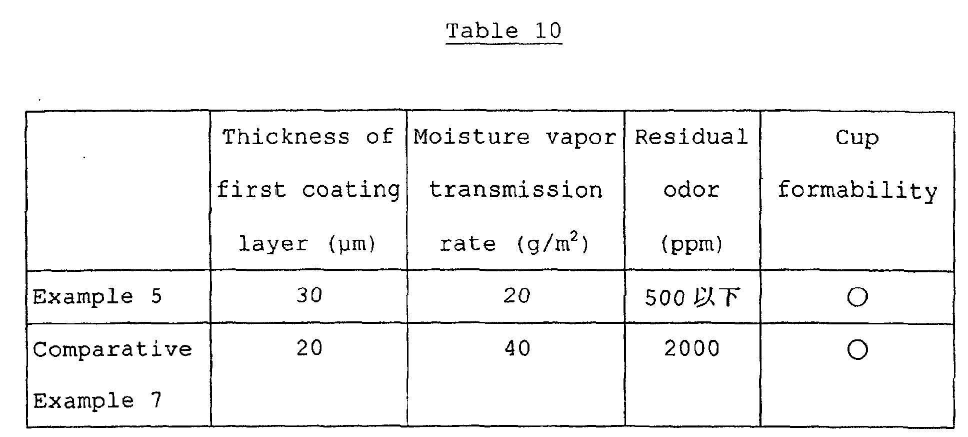

Accordingly, the paper cup obtained using the packaging material of Example 5 with the paper layer 37 which had been subjected to clay coating was revealed to be a biodegradable container made from paper exhibiting less unevenness in thickness of the first coating layer 38, and was excellent in moisture barrier property with less residual odor.

### (15) Fifteenth Embodiment

Fig. 17 is a cross sectional view illustrating a layered structure of a packaging material 110 according to the fifteenth embodiment. In Fig. 17, 115 denotes an oil resistant layer, 113 denotes a first coating layer containing a natural rubber, 111 denotes a first paper layer, 114 denotes a second coating layer containing a natural rubber, 112 denotes a second paper layer, and 116 denotes a sealant layer. The packaging material 110 has a construction including each layer laminated in the order described above.

The oil resistant layer 115 is provided for the purpose of: preventing the coating layer containing a natural rubber from adsorption and permeation of machine oil or lubricating oil for formation which is present during the formation of the container, on behalf of the positioning of the coating layer containing a natural rubber 113 on the outermost face of the container; and of preventing adhesiveness and stickiness of the coating layer containing a natural rubber depending on the mixing ratio of the components. Therefore, when such events can be prevented by other means, there exits no need to provide the oil resistant layer.

The oil resistant layer 115 is preferably formed by applying a solution of a material, which is a modified polymerized resin derived from starch whose hydroxyl groups were inverted by 80% or greater with a straight chain fatty acid such as lauric acid, in an organic solvent to the paper layer 113. However, in addition thereto, a biodegradable resin or a synthetic resin is applicable as long as it has oil resistance. Moreover, the application amount of the oil resistant layer 115 may be approximately 5 to 20 g/m² (solid content).

The first coating layer containing a natural rubber 113 and the second coating layer containing a natural rubber 114 comprise a natural rubber or a derivative thereof, and a material selected from natural resins, waxes and derivatives thereof having permeability into paper, with the application amount being approximately 10 to 30 g/m² (solid content).

The coating layers containing a natural rubber 113 and 114 can be formed using an application liquid which includes similar materials to those for the first coating layers according to other embodiments.

Thus, more sufficient moisture barrier property can be imparted to matters to be packed according to this embodiment through providing two coating layers containing a natural rubber, in comparison with the instance to provide the coating layer containing a natural rubber as a single layer.

The first paper layer 111 preferably used herein may be cup body paper having the weighing capacity of 50 to 140 g/m² and the density of 0.88 to 1.0 g/cm³ with clay coated on both faces 111a. Such a clay coated structure is provided for the purpose of: preventing reduction of the moisture barrier property on behalf of permeation into the paper layer 111 of the material in the coating layer containing a natural rubber, leading to failure of securement of the thickness of the coating layers containing a natural rubber 113 and 114; and of preventing generation of odor due to permeation of the natural rubber or the solvent into the paper layer 111.

The second paper layer 112 preferably used may be no coated cup body paper having the weighing capacity of 100 to 300 g/m² and the density of 0.85 to 1.0 g/cm³ without being subjected to clay coating. Through the use of such a no coated cup without being subjected to clay coating, adhesiveness between the paper layer 112 and the coating layer 114 containing a natural rubber is improved. However, cup body paper subjected to clay coating may be also used for the purpose of preventing reduction of the moisture barrier property and generation of odor resulting from permeation of the natural rubber or the solvent into the paper layer 112.

Furthermore, when a material having high permeability into paper such as a shellac resin or the like is used as the material of the sealant layer 116, the face on the sealant layer 116 side of the second paper layer 112 may be also subjected to clay coating in order to prevent permeation thereof into the paper layer 112.

The sealant layer 116 is provided by applying a biodegradable resin into a film, and examples of the biodegradable resin which can be used include materials used in the second coating layer according to other embodiments, i.e., polylactic acid, poly 3-hydroxy butyric acid (PHB), polybutylene succinate (PBS), a modified polymerized resin derived from starch (Cornpol), shellac and the like. Hence, the sealant layer 116 is a layer provided by applying a biodegradable resin having a sealant property into a film, favorable sealing property can be achieved in use for forming a container. In addition, through using the biodegradable resin as described above, oil resistance is imparted, and also water resistance is improved.

### (16) Sixteenth Embodiment

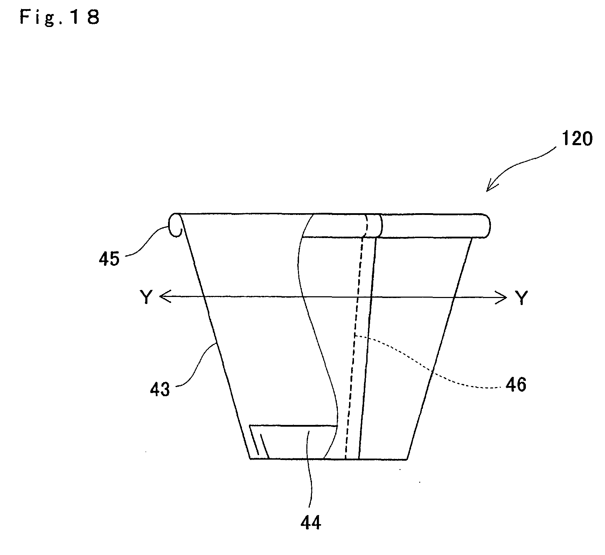

Fig. 18 is a cross sectional view illustrating a paper cup 120 which is a container made from paper according to the sixteenth embodiment. The paper cup 120 is produced by appropriate processing of the packaging material 110 according to the fifteenth embodiment to give the side body member and the bottom part member, and then any generally known forming machine of paper cups is used. For the bottom part member, a packaging material with no oil resistant layer 115 formed may be used. Further, the paper layer 111 may not be subjected to clay coating.

The paper cup 120 is a paper cup formed by a thermal adhesion method which includes a side body 43 and a bottom part 44, and has a portal marginal part 45 with the marginal circumference of the opening curled outward. The longitudinal end face 46 of the inner face side of the side body 43 is subjected to skived hemming processing. The paper cup 120 is formed so that the sealant layer 116 of the packaging material 110 is brought to be the inner face side of the container for both of the side body 43 and the bottom part 44.

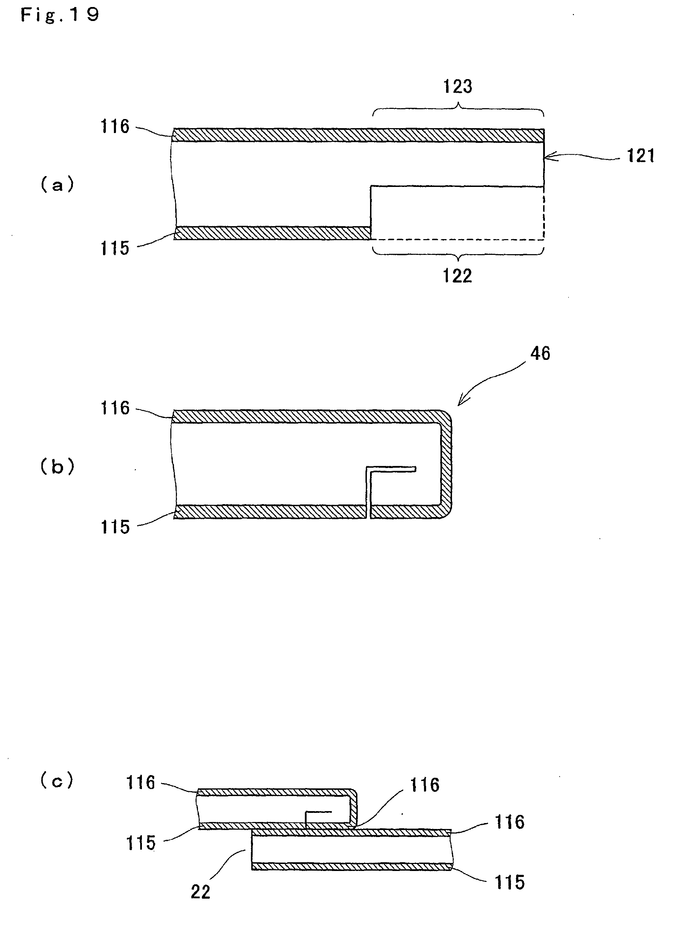

Skived hemming processing is explained below with reference to the cross sectional view shown in Fig. 19. The cross sectional view shown in Fig. 19 presents a cross section cut with the Y-Y line depicted in Fig. 18. The skived hemming processing according to this embodiment is accomplished by deleting one longitudinal end face 121 of the side body member by substantially half thickness 122 of the side body member in a predetermined length from the top (skive) (see, Fig. 19 (a)), and the remaining part 123 after deletion is turned such that the deleted face becomes inner side (hemming) (see, Fig. 19 (b) ) , to protect the end face of the side body member. Thus turned surfaces which had been deleted are allowed to adhere with each other using the starch glue.

When the paper end face is exposed to the inner face of the paper cup, the ingredient is permeated therefrom into the packaging material leading to deterioration of the container strength of the paper cup. However, according to this embodiment, skived hemming processing is executed thereby preventing such an event.

In addition, because the skived hemming processing results in lamination of the same sealant layers 116 with each other upon formation of the paper cup 120 (see, Fig. 19 (c)), formability of the container is improved.

### <Example>

The fifteenth to sixteenth embodiments are explained below in more detail by way of Example.

### Example 6

Cup body paper having the weighing capacity of 70 g/m² with clay coated on both faces 111a in an amount of 8 g/m² was prepared as a first paper layer 111, and no coated cup body paper having the weighing capacity of 220 g/m² was prepared as a first paper layer 112.

Separately, a solution of the natural rubber material (solid content: 50%, solvent: butyl acetate) blended in a mixing ratio of: natural rubber /modified rosin /carnauba wax /ester gum /gutta percha = 20/ 57/ 7/ 8/ 2 was applied on both faces of the first paper layer 111 by a roll coating method, and dried (application amount: each 15 g/m² (solid content)) to form the first coating layer containing a natural rubber 113 and the second coating layer containing a natural rubber 114.

Additionally, on the first coating layer containing a natural rubber 113 was applied a solution of a modified polymerized resin derived from starch comprising CPR-D703 (Nihon Cornstarch corporation) (solid content: 35%, solvent: ethyl acetate) by a roll coating method followed by drying (application amount: 20 g/m² (solid content)) to form an oil resistant layer 115.

Separately, polylactic acid (PLA) which shall be the sealant layer 116 was prepared, and laminated by a melt extrusion lamination method so that the application amount becomes 20 g/m² to the no coated cup body paper which is the second cup body paper 112 that had been previously prepared.

Then, the packaging material 110 was produced having a layered structure of: oil resistant layer 115 /first coating layer containing a natural rubber 113 /first paper layer 111/second coating layer containing a natural rubber 114 /second paper layer 112 /sealant layer 116 by hot pressing lamination of the first cup body paper 111 having the first coating layer containing a natural rubber 113, the second coating layer containing a natural rubber 114 and the oil resistant layer 115 applied, and the second cup body paper 112 having the sealant layer 116 laminated, through allowing the second coating layer containing a natural rubber 114 face to be opposed to the second cup body paper 112 face under a condition at the temperature of 140°C and the pressure of 0.31 MPa (lamination velocity: 50 m/min).

Such a packaging material 110 was punched out to give a predetermined sized substantially sectorial shape, and one longitudinal end face was subjected to skived hemming processing to provide the side body member.

Next, the bottom part member was produced. Cup body paper having the weighing capacity of 70 g/m² was prepared as the first cup body paper 111, and on one face of this cup body paper was applied a coating layer containing a natural rubber having the identical formulation to that used upon producing the side body member so that the application amount became 30 g/m² (solid content) by the identical method to that adopted upon producing the side body. Additionally, also as the second paper layer 112, similar no coated cup body paper having the weighing capacity of 220 g/m² to one used upon producing the side body was prepared. Thus, polylactic acid (PLA) which shall be the sealant layer was prepared, and laminated to one face by a melt extrusion lamination method so that the application amount becomes 200 g/m².

Then, the bottom part member having the layered structure of: first paper layer /coating layer containing a natural rubber /second paper layer /sealant layer was produced by hot pressing lamination of the first cup body paper having the coating layer containing a natural rubber applied, and the second cup body paper having the sealant layer laminated, through allowing the coating layer containing a natural rubber to be opposed to the second cup body paper under a condition at the temperature of 140°C and the pressure of 0.31 MPa (lamination velocity: 50 m/min).

Using the side body member and the bottom part member produced in such a manner, a paper cup, which includes the second coating layer having the sealant property provided inside and has a portal marginal part, was formed with a generally known forming machine of paper cups having the height of 90 mm, bore diameter of 88 mm, and taper angle of 6.5° to give the paper cup of Example 6.

### Comparative Example 8

Using the packaging material having the layered structure of: first paper layer /coating layer containing a natural rubber /second paper layer /sealant layer, which was used as the bottom part member in Example 6 for both of the side body member and the bottom part member, a paper cup was formed in a similar manner to Example 6 to obtain the paper cup of Comparative Example 8. However, the side body member was not subjected to the skived hemming processing.

### Experiment 11

Cup formability and moisture barrier property of the two types of the paper cup of Example 6 and Comparative Example 8 described above were observed and evaluated according to the following process. The results are shown in Table 11.

Evaluation of cup formability was carried out by visually observing the formability. Absence of the problem was evaluated as ○; and presence of incomplete side sealing was evaluated as ×.

The moisture barrier property was evaluated by charging 50 g of calcium chloride into a sample paper cup, tight sealing, followed by leaving to stand in an atmosphere at the temperature of 40°C and humidity of 90%. An amount of transmitted moisture per one day was measured on the basis of changes in weight after leaving, and the determination as sufficient moisture barrier property was evaluated as ○; and determination as not sufficient moisture barrier property was evaluated as Δ. In instances of the measurement was not performed, evaluation was represented as -.

**Table 11**

| | Cup formability | Moisture barrier property |
|---|---|---|
| Example 6 | ○ | ○ (1.0 g/cup) |
| Comparative Example 8 | ○ | Δ (2.5 g/cup) |

Accordingly, the paper cup which includes double coating layers containing a natural rubber and is subjected to skived hemming processing of the end face of the side body member is revealed to have further improved moisture barrier property.

## Claims

1. A packaging material having a paper layer and a first coating layer laminated thereon,
said first coating layer comprises a first material and a second material, wherein the first material is a natural rubber or a derivative thereof, and the second material is a material selected from natural resins, waxes and derivatives thereof having permeability into paper.

2. A packaging material having a paper layer, a first coating layer and a second coating layer laminated in this order,
said first coating layer comprises a first material and a second material, wherein the first material is a natural rubber or a derivative thereof, and the second material is a material selected from natural resins, waxes and derivatives thereof having permeability into paper, and
said second coating layer has oil resistance and consists of a biodegradable material.

3. A packaging material having a first coating layer, a paper layer and a second coating layer laminated in this order,
said first coating layer comprises a first material and a second material, wherein the first material is a natural rubber or a derivative thereof, and the second material is a material selected from natural resins, waxes and derivatives thereof having permeability into paper, and
said second coating layer has oil resistance and consists of a biodegradable material.

4. A packaging material having a paper layer, a first coating layer, a paper layer and a second coating layer laminated in this order,
said first coating layer comprises a first material and a second material, wherein the first material is a natural rubber or a derivative thereof, and the second material is a material selected from natural resins, waxes and derivatives thereof having permeability into paper, and
said second coating layer has oil resistance and consists of a biodegradable material.

5. A packaging material having an oil resistant layer, a first coating layer, a paper layer, a first coating layer, a paper layer and a second coating layer laminated in this order,
said first coating layer comprises a first material and a second material, wherein the first material is a natural rubber or a derivative thereof, and the second material is a material selected from natural resins, waxes and derivatives thereof having permeability into paper,
said oil resistant layer consists of a biodegradable material, and
said second coating layer has oil resistance and a sealant property, and consists of a biodegradable material.

6. The packaging material according to any one of claims 1 to 5 wherein said second material is at least one selected from the group consisting of ester gum, dammar, copal, copaiba balsam, benzoin gum, gum olibanum, opopanax, sandarac, Guaiac, mastic, myrrha, Leche de vaca, kauri gum, rosin, fir balsam, elemi, chicle, jelutong, sorva, Venezuela chicle, niger gutta, Chilte, gutta katiau, Tunu, sorbinba, Massaranduba chocolate, Massaranduba balata, balata, Rosidinha, guayule, guttapercha, gutta percha, shellac, urucury wax, carnauba wax, candelilla wax, whale wax, rice bran wax, sugarcane wax, bees wax, wood wax, montan wax, oil stuff seed wax and lanolin.

7. The packaging material according to claim 6 wherein said second material comprises ester gum.

8. The packaging material according to any one of claims 1 to 5 wherein the ratio of said first material in said first coating layer is 70% by weight or less.

9. The packaging material according to claim 8 wherein the ratio of said first material in said first coating layer is in the range of from 20 to 50% by weight.

10. The packaging material according to any one of claims 2 to 5 wherein the biodegradable material of said second coating layer is at least one selected from the group consisting of poly 3-hydroxybutyric acid, polylactic acid, polylactic acid derivatives, polybutylene succinate, modified polymerized resins derived from starch, and a shellac resin.

11. The packaging material according to claim 10 wherein the biodegradable material of said second coating layer is a modified polymerized resin derived from starch, and said modified polymerized resin is an ester compound having the blocking ratio of hydroxyl groups with lauric acid and dextrin of 80% or greater.

12. The packaging material according to any one of claims 1 to 5 wherein at least one face of said paper layer is clay coated.

13. The packaging material according to claim 12 wherein the face of said paper layer to be laminated with said first coating layer is clay coated.

14. A container which is produced using the packaging material according to any one of claims 1 to 13.

15. A container which is produced using the packaging material according to any one of claims 2 to 5, and is produced so that said second coating layer becomes an inside face of the container.

16. A container which comprises paper having at least a first coating layer laminated thereon, and a biodegradable material,
said first coating layer comprises a first material and a second material, wherein the first material is a natural rubber or a derivative thereof, and the second material is a material selected from natural resins, waxes and derivatives thereof having permeability into paper.

17. The container according to any one of claims 14 to 16 which comprises a cylindrical side body.

18. A container which comprises an outer container of which base material is paper, and an inner container made from a pulp mold which is fit to inside of said outer container,
wherein the inside face of said outer container has a first coating layer formed, and
the inside face of said inner container has a second coating layer formed,
said first coating layer comprises a first material and a second material, wherein the first material is a natural rubber or a derivative thereof, and
the second material is a material selected from natural resins, waxes and derivatives thereof having permeability into paper, and
said second coating layer has oil resistance, and consists of a biodegradable material.

19. The container according to claim 18 wherein the biodegradable material of said second coating layer is a shellac resin.

20. A container which comprises an outer container made from a pulp mold, and an inner container which is fit to inside of said outer container, of which base material is paper,
wherein the outside face of said inner container has a first coating layer formed, the inside face of said inner container has a second coating layer formed,
said first coating layer comprises a first material and a second material, wherein the first material is a natural rubber or a derivative thereof, and the second material is a material selected from natural resins, waxes and derivatives thereof having permeability into paper, and
said second coating layer has oil resistance, and consists of a biodegradable material.

21. The container according to any one of claims 18 to 20
wherein a spaced layer is formed to a part of the facing zone between said inner container and said outer container.

22. A process for producing a container using a packaging material having at least a paper layer and a first coating layer laminated, and a biodegradable sealant layer laminated to the outermost face, in such a manner to allow a part of said packaging material is overlaid,
said first coating layer comprises a first material and a second material, wherein the first material is a natural rubber or a derivative thereof, and the second material is a material selected from natural resins, waxes and derivatives thereof having permeability into paper, and
said process comprises a skived hemming processing performed such that the outermost face of the end face of the overlaid part where said packaging material is overlaid becomes said sealant layer.

23. A container produced using a packaging material having at least a paper layer and a first coating layer laminated, and a biodegradable sealant layer is laminated to the outermost face,
wherein a side body is formed by overlaying the end to an end of said packaging material such that said sealant layer is positioned to the inside face,
said first coating layer comprises a first material and a second material, wherein the first material is a natural rubber or a derivative thereof, and the second material is a material selected from natural resins, waxes and derivatives thereof having permeability into paper, and
wherein skived hemming processing is carried out such that the outermost face of the end face of the overlaid part where said packaging material is overlaid becomes said sealant layer.
